# EUROPEAN PATENT APPLICATION

(11) **EP 4 287 020 A1**
(43) Date of publication of application: **06.12.2023**
(21) Application number: 22176743.7
(22) Date of filing: 01.06.2022
(51) Int. Cl.: G06F 9/451, G06F 3/0481, G06F 3/04886

(54) **METHOD AND SYSTEM FOR RESIZING A VIEW AND ASSIGNED DATA OBJECTS OF A GRID DISPLAYED IN A DASHBOARD SOFTWARE PRODUCT**

(71) Applicant: BASF Coatings GmbH, 48165 Münster (DE)
(72) Inventor: The designation of the inventor has not yet been filed
(74) Representative: BASF IP Association

(57) **Abstract**

Aspects described herein generally relate to methods and systems for resizing a view and all assigned data objects of a grid displayed in an area of a graphical user interface (GUI) of a dashboard software product, in particular a colorimetry software product. The area of the GUI contains a grid comprising at least two views and at least one data object assigned to at least one of the views, said grid having been generated by splitting an area of the GUI horizontally or vertically in at least two views and assigning at least one data object type to the generated views. Each splitting is assigned to a splitter instance having a defined splitting ratio between the first and the second view of said splitter instance. The maximize functionality of the grid enables the user to temporarily maximize a view and at least part of the assigned data objects displayed in multiple tabs, each tab with a dedicated instance of a view, and to resize the grid afterwards restoring the old splitting ratios. During the whole maximizing/resizing process all data objects and all dedicated views are kept unaltered regarding their configuration and no new instance (e.g. to visualize a maximized representation of the respective widget) is generated.

## Description

### FIELD

Aspects described herein generally relate to methods and systems for resizing a view and all of its assigned data objects of a grid displayed in an area of a graphical user interface (GUI) of a dashboard software product, in particular a colorimetry software product. The area of the GUI contains a grid comprising at least two views and at least one data object assigned to at least one of the views, said grid having been generated by splitting an area of the GUI horizontally or vertically in at least two views and assigning at least one data object type to the generated views. Each splitting is assigned to a splitter instance having a defined splitting ratio between the first and the second view of said splitter instance. The maximize functionality of the grid enables the user to temporarily maximize a view and at least part of the assigned data objects displayed in multiple tabs, each tab with a dedicated instance of a view, and to resize the grid afterwards restoring the old splitting ratios. During the whole maximizing/resizing process, all data objects and all dedicated views are kept unaltered regarding their configuration and no new instance (e.g. to visualize a maximized representation of the respective view) is generated.

### BACKGROUND

At one time computer systems, whether standalone or part of a network, were relatively simple, low function devices capable of executing only a single application program at any given time. Displays or consoles used to monitor system operation gave a user only a single representation or view of the system operation. As individual systems and networks became more complex, allowing multiple tasks to be performed concurrently, system users began to have a need for more than a single view of operations or tasks being performed. The straightforward approach of dedicating a console to each of the different views had obvious usability, space and cost drawbacks. Consequently, the almost universal approach has been to develop systems and monitors capable of presenting multiple views at any given time.

The two major approaches to presenting multiple views on a console are cascading and tiling of windows. A "window" is a view that occupies less than an entire display screen, but which still shows significant portions of a particular view. Where windows are cascading, only the topmost window is completely visible on the display screen. The remaining windows are "stacked" beneath the topmost window, usually with only a title bar and perhaps one vertical edge being visible. A user brings any window in the stack to the top simply by selecting the title bar or any other visible part of that window.

Tiled views do not overlap each other but instead occupy horizontally or vertically divided windows on the display screen. Tiling permits a user to see more information about each represented view without having to perform the type of view selection steps required for cascaded views. Known tiling techniques have disadvantages, including a lack of flexibility. Some techniques limit the user to simple, fixed tiling arrangements, such as two side-by-side panes or two above-and-below panes. A user who wants to have a number of views greater than the fixed number of panes available in such systems is out of luck. Other techniques take an all-or-nothing approach, setting up a tile for every open view. The all-or-nothing approach is satisfactory only if the number of open views is small. As the number of open views increases, the size of each tile necessarily gets smaller, reducing the amount of useful information presented to the user.

One well-known operating system enables a user to subdivide the window into a wide variety of horizontally or vertically divided frames. A window that is divided into two or more windows is called a splitter window. The independent areas of the window inside the splitter window are called panes, and the separating bar between them is called a splitter line or a splitter bar. Splitter bars can be moved horizontally or vertically, thus changing the relative size of the panes or the splitter ratio. Using a splitter window has the advantage of keeping the two displays in the same relative position no matter what happens to the entire window.

Using standard support for splitter windows, one can run horizontal splitter bars all the way across the window and vertical splitter bars all the way from the top to the bottom of the window. For maximal flexibility in the design of the user interface, it should also be possible to have nested splitter windows (i.e. panes which can be split again).

For programs that use splitter windows to be flexible, the user must be able to perform the splitting as desired and must be able to select the required data to be displayed in each split pane individually. This allows to design a GUI showing all the information required by the user. Such high flexibility is especially required in cases where different data, for example measurement data, needs to be displayed at once, for example if it is important to achieve color matching between car bodies and attached parts, such as bumpers, hatches, rearview mirror covers or door handles. To ensure compliance regarding batch consistency and production consistency, and to guarantee that the color specifications and tolerances of colorimetric properties are met, software tools have been developed for the support of the quality management of the production process. Such software tools enable ongoing monitoring of the color matching between bodies and attached parts, combine instrument-based colorimetry with analytical methods, convert this statistical data into graphics and indicate deviations.

The colorimetric measurement data as well as the generated graphics and deviations are normally displayed using graphical user interfaces (GUIs) that fit within a visual display of the computing device on which it is executed. The GUI normally also comprises a splitter window function to allow display of a multitude of different and varying data object types, such as raw data, graphs, deviations, etc..

Generation of splitter windows as well as the assignment of different data object types to each pane generated upon splitting is known in the state of the art. For example, EP 2 930 613 A1 describes methods, systems, and computer program products for generating user interface layouts. The method includes dividing an available vertical space associated with a graphical user interface into a plurality of allowed vertical space allocations based on a priority of a plurality of data display fields, calculating, by a computer, slack following each data display field expanding to fill an allowed vertical space allocation associated with the data display fields, allocating the slack among the plurality of data display fields, re-calculating, by a computer, slack following allocation of slack among the plurality of data display fields, and finalizing display of the plurality of data display elements in the graphical user interface. US 6 874 128 B1 discloses a mouse driven splitter program and algorithm which comprises dragging a cursor from a begin point in the display window to an end point in the display window; and dividing the display window into two separate split display windows, each of said separate split display windows having a newly-formed edge substantially aligned with a line that would pass through the begin and end points. A scrollable list box associated with each of the split display windows is provided, each list box containing one or more display options for display in the associated window; and one of the display options is selected for display for each of the split display windows; and a visual display associated with the selected display option is displayed within each of the split display windows.

While EP 2 930 613 A1 allows to split the window vertically and to adjust the size of each pane according to a defined prioritization, said method is not suitable if the window also needs to be split horizontally. Since splitting of the display results in decreased sizes of each pane and thus also the assigned data object, several splitting operations, such as described in US 6 874 128 B1, may result in panes being too small to ensure sufficient visibility of the data displayed in said pane.

It would therefore be desirable to provide user friendly methods and systems for resizing one of a plurality of views and at least part of its assigned data objects of a splitter window or a grid formed of such splitter windows, said splitter window or grid being displayed within an area of a graphical user interface (GUI). More specifically, the computer-implemented methods and systems for resizing one of a plurality of views and at least part of its assigned data objects should allow to resize a specific view and at least part of the assigned data objects to full view, i.e. to the increase or decrease the current size of said view and at least part of its assigned data objects, without generating a new instance to visualize the resized view and at least part of its assigned data objects. Afterwards, the user should be able to restore the original view of the grid, i.e. the view visible prior to resizing one specific view and at least part of its assigned data objects.

### SUMMARY

To address the above-mentioned problems in a perspective the following is proposed: A computer-implemented method for resizing a view and at least part of its assigned data objects of a grid displayed in an area of a graphical user interface (GUI) of a dashboard software product, said method comprising:
under the control of one or more computer system configured with executable instructions, at least one computer system comprising a display,
(i) displaying on the display the GUI comprising the grid containing at least two views and at least one data object assigned to at least one of the views, wherein the grid has been generated by splitting an area of the GUI horizontally or vertically in at least two views and assigning at least one data object type to the generated views, each splitting being assigned to a splitter instance having a defined splitting ratio between the first and the second view associated with said splitter instance;
(ii) detecting a user input to resize one of the views displayed in step (i);
(iii) retrieving via a communication interface data associated with the grid from a data storage medium or determining data associated with the grid based on the displayed grid, wherein the data associated with the grid contains the splitting ratio of each splitter instance of the grid, the splitter instance identifier of each splitter instance of the grid and optionally the splitter line thickness associated with each splitter instance of the grid;
(iv) determining the view to be resized and the splitter instance associated with said view based on the detected user input and the retrieved or determined data associated with the grid;
(v) resizing the view determined in step (iv) and at least part of its assigned data objects based on the retrieved or determined data associated with the grid and the determined splitter instance; and
(vi) displaying on the display the resized view and at least part of its assigned data objects in the area of the GUI.

It is an essential advantage of the method according to the present invention that the user can temporarily resize, such as maximize, a view containing multiple assigned data objects, each with a dedicated instance of a view while keeping all data objects and all dedicated views unaltered regarding their configuration, thus avoiding generating a new instance (e.g. to visualize a resized, such as maximized, representation of the respective view and at least part of its assigned data objects). This allows an efficient method to resize, such as maximize, a view and at least part of its assigned data objects within a grid and thus allows maximum flexibility and usability of the grid because the user does not have to consider which view has a suitable size for the data object to be displayed to ensure sufficient visibility since the view containing the data object(s) of interest can be easily and quickly resized. The resizing starts from the view to be resized and triggers a signal cascade which ends up in the root splitter instance. The resizing process can be easily reverted, for example to return to the view of the grid displayed in step (i), by restoring the original splitting ratios and splitter line thicknesses (i.e. the splitting ratios and splitter line thicknesses used to display the grid prior to the resizing operation)

Further disclosed is:
A computing apparatus for resizing a view and at least part of its assigned data objects of a grid displayed in an area of a graphical user interface (GUI) of a dashboard software, said system comprising:
- a display configured to display the GUI comprising the grid containing at least two views and at least one data object assigned to at least one view and to display the resized view and at least part of its assigned data objects in the area of the GUI;
- an interaction element configured to detecting a user input to resize a view and at least part of its assigned data objects of the displayed grid;
- one or more computing nodes; and
- one or more computer-readable media having thereon computer-executable instructions that are structured such that, when executed by the one or more computing nodes, cause the apparatus to perform the steps according to the inventive method.

The inventive computing apparatus allows to efficiently resize, such as maximize, a view and at least part of its assigned data objects within a grid and to restore the original grid while keeping all dedicated views unaltered regarding their configuration, thus avoiding the generation and configuration of a new instance for each resizing operation.

Further disclosed is:
A non-transitory computer-readable storage medium, the computer-readable storage medium including instructions that when executed by one or more processors of a computer system, cause the computer system to perform the steps according to the computer-implemented method described herein.

The disclosure applies to the methods, apparatuses and non-transitory computer-readable storage media disclosed herein alike. Therefore, no differentiation is made between methods, apparatuses and non-transitory computer-readable storage media. All features disclosed in connection with the inventive method are also valid for the computing apparatus and non-transitory computer-readable storage media disclosed herein.

Further disclosed is the use of the method disclosed herein in a dashboard software product, in particular in a colorimetry software product.

### EMBODIEMENTS

### Embodiments of the inventive method

The inventive method allows to resize a view and at least part of its assigned data objects of the displayed grid and is performed under the control of one or more computer systems. The term "computing system" is defined herein broadly as including one or more computing nodes, a system of nodes or combinations thereof. The term "computing node" is defined herein broadly and may refer to any device or system that includes at least one physical and tangible processor, and a physical and tangible memory capable of having thereon computer-executable instructions that are executed by a processor. Computing nodes are now increasingly taking a wide variety of forms. Computing nodes may, for example, be handheld devices, production facilities, sensors, monitoring systems, control systems, appliances, laptop computers, desktop computers, mainframes, data centers, or even devices that have not conventionally been considered a computing node, such as wearables (e.g., glasses, watches or the like). The memory may take any form and depends on the nature and form of the computing node. Methods described herein (or variations and/or combinations thereof) are performed under the control of one or more computer systems configured with executable instructions and may be implemented as code (e.g., executable instructions, one or more computer programs or one or more applications) executing collectively on one or more processors, by hardware or combinations thereof. The code may be stored on a computer-readable storage medium, for example, in the form of a computer program comprising a plurality of instructions executable by one or more processors. The computer-readable storage medium may be non-transitory. In some embodiments, the code is stored on set of one or more non-transitory computer-readable storage media having stored thereon executable instructions that, when executed (i.e., as a result of being executed) by one or more processors of a computer system, cause the computer system to perform operations described herein. The set of non-transitory computer-readable storage media may comprise multiple non-transitory computer-readable storage media and one or more of individual non-transitory storage media of the multiple non- transitory computer-readable storage media may lack all of the code while the multiple non- transitory computer-readable storage media collectively store all of the code. Further, in some examples, the executable instructions are executed such that different instructions are executed by different processors. As an illustrative example, a non-transitory computer- readable storage medium may store instructions. A main CPU may execute some of the instructions and a graphics processor unit may execute other of the instructions. Generally, different components of a computer system may have separate processors and different processors may execute different subsets of the instructions. "Processor" or "computer processor" refers to an arbitrary logic circuitry configured to perform basic operations of a computer or system, and/or, generally, to a device which is configured for performing calculations or logic operations. In particular, the processing means, or computer processor may be configured for processing basic instructions that drive the computer or system. As an example, the processing means or computer processor may comprise at least one arithmetic logic unit ("ALU"), at least one floating-point unit ("FPU)", such as a math coprocessor or a numeric coprocessor, a plurality of registers, specifically registers configured for supplying operands to the ALU and storing results of operations, and a memory, such as an L1 and L2 cache memory. In particular, the processing means, or computer processor may be a multicore processor. Specifically, the processing means, or computer processor may be or may comprise a Central Processing Unit ("CPU"). The processing means or computer processor may be a ("GPU") graphics processing unit, ("TPU") tensor processing unit, ("CISC") Complex Instruction Set Computing microprocessor, Reduced Instruction Set Computing ("RISC") microprocessor, Very Long Instruction Word ("VLIW") microprocessor, or a processor implementing other instruction sets or processors implementing a combination of instruction sets. The processing means may also be one or more special-purpose processing devices such as an Application-Specific Integrated Circuit ("ASIC"), a Field Programmable Gate Array ("FPGA"), a Complex Programmable Logic Device ("CPLD"), a Digital Signal Processor ("DSP"), a network processor, or the like. The methods, systems and devices described herein may be implemented as software in a DSP, in a micro-controller, or in any other side-processor or as hardware circuit within an ASIC, CPLD, or FPGA. It is to be understood that the term processing means or processor may also refer to one or more processing devices, such as a distributed system of processing devices located across multiple computer systems (e.g., cloud computing), and is not limited to a single device unless otherwise specified.

Accordingly, in some examples, computer systems are configured to implement one or more services that singly or collectively perform methods described herein. Such computer systems may, for instance, be configured with applicable hardware and/or software that enable the performance of the operations. Further, computer systems that implement various embodiments of the present disclosure may, in some examples, be single devices and, in other examples, be distributed computer systems comprising multiple devices that operate differently such that the distributed computer system performs the operations described herein and such that a single device may not perform all operations.

"Grid" refers to a splitter window obtained by splitting a window or part of a window at least once into at least two views (also called panes or subareas or (grid) cells). Upon each splitting operation, two views are generated. The relative size of each view generated by the splitting operation is defined as splitting ratio and may either be predefined or defined by the user prior or after the splitting operation. The splitting ratio is defined as the ratio between the two relevant lengths of the views resulting from a splitting operation. For splitting a view (also called ancestor view) along its horizontal axis, the splitting ratio is thus defined as the width of the descendent left view over the width of the descendant right view. Correspondingly, the splitting ratio is defined as the height of the descendent top view over the height of the descendent bottom view if an ancestor view is split along its vertical axis. The term "resizing" of a view and at least part of its assigned data object(s) refers to changing the aspect ratio of the view and at least part of its assigned data object(s). The aspect ratio is given as the ratio between the height and the width of the view and each assigned data object, respectively, and may be any positive value. Changing the aspect ratio may include maximizing the initial aspect ratio of the view and at least part of its assigned data object(s) or minimizing the current aspect ratio of the view and at least part of its assigned data object(s) to their initial aspect ratio. The initial aspect ratio of the view and the initial aspect ratio of its assigned data object(s) refers to the initial aspect ratio of the view and its assigned data object(s) in the grid, i.e. the aspect ratio of the view and its assigned data object(s) prior to any maximizing operation. The initial aspect ratio of the view may correspond to the splitting ratio associated with the view. In one example, the initial aspect ratio of each data object assigned to the view also corresponds to the splitting ratio associated with the view (i.e. if the size of each data object corresponds to the size of the view). In another example, the initial aspect ratio of each data object assigned to the view is smaller than the initial aspect ratio of the view (i.e. if the size of each data object is smaller than the size of the view). In contrast, the current aspect ratio of the view and at least part of its assigned data object(s) refers to the aspect ratio of the view and at least part of its assigned data object(s) after a maximization operation.

Resizing the view and at least part of the assigned data objects may comprise increasing the aspect ratio of the view and at least part of the assigned data objects compared to the initial aspect ratio of the view and at least part of its assigned data objects and/or decreasing the current aspect ratio of the view and at least part of its assigned data objects to the initial aspect ratio of said view and at least part of its assigned data objects. The term "assigned data objects" refers to all data objects displayed within a particular view of the grid. If more than one data object is assigned to a view, all assigned data objects may be displayed at once or only one assigned data object is displayed while the others are temporarily hidden but can be selected by the user, for example using tabs which can be selected. Selecting a tab results in display of the data object associated with the respective tab while data objects associated with other tabs of said view are temporarily hidden. In one example, the view and at least part of its assigned data objects are maximized. In another example, a maximized view and at least part of its assigned maximized data objects are minimized to their initial aspect ratio. This allows to restore the grid to its original view, i.e. the view of the grid prior to the maximization operation.

In an aspect, the data object and corresponding data object type is selected from the group consisting of numbers, text, symbols, tables, diagrams, pictures, color data of a coating layer, appearance data of a coating layer, thickness data of a coating layer, topographic surface data of a coating layer, or a combination thereof. The color data may include color space data, such as CIEL*a*b* values, CIEL*C*H* values or RGB values, and/or texture characteristics, such as coarseness characteristics and/or sparkle characteristics. The appearance data may include short wave values, long wave values, DOI, gloss data or a combination thereof. The color data can be determined, for example, using multi-angle spectrophotometers and the raw measurement data, such as reflectance curves, may be used to generate the color space data mentioned previously. Topographic surface data of a coating layer may include, for example, the surface roughness of a coating layer, or the data on the surface profile of the coating layer, for example if the coating layer is a structured coating layer.

The grid is displayed in the area of the graphical user interface (GUI) of the software dashboard product. The dashboard software product may be any software product which needs to display and control a multitude of different and varying data objects. Examples include trading software applications, e.g., for trading stocks, bonds, options, currencies, goods etc.; software applications in the health sector for monitoring a plurality of vital parameters of a patient like pulse rate, blood pressure, breathing frequency, oxygen saturation, heart rhythm, brain waves etc.; and tools for testing and/or monitoring machines; e.g., engines, which monitor and/or control exhaust parameters, pressure, liquid flow, gas flow, voltages, currents, power, torque, temperature, rotational speed etc. With particular preference, the dashboard software is a colorimetry software product. The term "colorimetry software product" refers to a software product or software application which is configured to process colorimetric data, i.e. color data and/or appearance data, and optionally further coating property data, such as coating thickness data and/or topographic surface data.

### Step (i):

In step (i) of the inventive method, the GUI comprising the grid is displayed on the display. The term "display" refers to the screen of an output device for presentation of information in visual or tactile form (the latter may be used in tactile electronic displays for blind people). The screen may be the physical screen of the at least one computer system or may be the projection region of the at least one computer system.

The displayed grid contains at least two views and at least one data object assigned to at least one of the views. The grid has been generated by splitting an area of the GUI horizontally or vertically in at least two views and assigning at least one data object type to the generated views. Each splitting is assigned to a splitter instance having a defined splitting ratio between the first and the second view associated with said splitter instance. "Splitter instance" refers to the splitting operation performed by the user upon splitting the window or part of the window (referred to as "area" hereinafter) in a defined ratio to generate the grid. Each splitter instance is therefore associated with two views or panes having a defined splitting ratio as well as a splitter line to optically split the two views or panes. The splitting ratio may be adjusted by the user after performing the splitting operation or may be defined by the user prior to the splitting operation. "Root splitter instance" refers to the splitter instance generated upon the first splitting operation performed by the user and does therefore not have any ancestor splitter instances, i.e. the root splitter instance is not a nested splitter instances or a descendant splitter instance. The views associated with the root splitter instance can be regarded as the starting point of two branches because each one of the two views generated upon splitting the window or area for the first time can be split again several times, thus resulting in further branching of said two branches. The term "nested splitter instance" or "descendant splitter instance" are used interchangeably and refer to a splitter instance generated upon splitting a view (or pane) associated with an already existing splitter instance, for example splitting a view which has been generated by a prior splitting operation. Said view (or pane) can either be associated with a root splitter instance or a nested splitter instance. Nested or descendant splitter instances therefore have ancestor splitter instances and can be regarded as descendant splitter instances of the views of the ancestor splitter instances they are generated from. Splitter instances not being split any longer, i.e. splitter instances not having any descendant splitter instances, can be called "leaf splitter instances".

In one example, the GUI displayed on the display comprises, in addition to the area containing the grid, at least one further menu and/or header and/or footer.

In an aspect, each splitter instance is assigned to a splitter instance identifier being indicative of a root splitter instance or a nested splitter instance. The splitter instance identifier is a unique identifier for each splitter instance and contains information on the location of each splitter instance in the splitter instance tree as well as the relation of each splitter instance to existing ancestor and descendant splitter instances. The splitter instance identifier thus allows to identify an existing splitter instance within a plurality of splitter instances associated with the grid as well as to identify any existing ancestor and descendant splitter instances thereof. After identifying the splitter instance, further information associated with said splitter instance, such as the views and assigned data objects as well as the splitter ratio can be determined.

Step (i) of the inventive method may be performed using several methods. In one example, displaying the grid in step (i) comprises the following steps:
a) detecting a binary user input consisting of a selection of whether the area is to be split horizontally or vertically;
b) determining whether the area is to be split horizontally or vertically based on the user input detected in step a) and performing a horizontal or vertical split of the area into two views separated by a splitter line having a defined thickness, the splitting being assigned to a splitter instance identifier indicating a root splitter instance or a nested splitter instance and the root splitter instance or the nested splitter instance being associated with a defined splitting ratio between the first and second view and with the splitter line having the defined thickness;
c) providing the views generated from the splitting performed in step b) for display within the area of the GUI;
d) optionally repeating steps a) and b) for at least one generated view;
e) detecting a user input being indicative of finishing generation of the grid; and
f) detecting a user input being indicative of assigning at least one data object type provided by the dashboard software product to at least one view of the grid obtained after step e), assigning said data object type(s) to the respective view(s) and providing the assigned data object(s) for display in the respective views of the grid.

The binary input consists of a selection of whether the area is to be split horizontally or vertically. In other words, the binary input is a single piece of information which can only take one of two expressions, namely "split horizontally" or "split vertically". The binary input does therefore not contain information on the position at which the area or view is to be split. In other words, no information on the exact position of the splitting is contained in the binary input.

Step a) may include detecting a selection of the area via an interaction element prior to detecting a binary user input being indicative of a horizontal split of the selected area or a vertical split of the selected area. The selection of the area may be detected by detecting the position of a cursor in the area or navigation of the curser into an area, by detecting a touchscreen gesture in the respective area or by detecting a short cut combination being indicative of a selection of a specific area.

The detected binary user input may be a detected left or right mouse click, a detected left or right touchscreen gesture or a detected short cut combination. The binary input may be detected by detecting the position of the cursor in an area or navigation of the cursor into an area as previously described prior to detecting the binary input. In one example, the binary input is detected by detecting a left mouse-click or a right mouse-click. In another example, the binary input is detected by detecting a touchscreen gesture being indicative of a horizontal or vertical splitting of the selected area.

In step b), it is determined whether the area is to be split horizontally or vertically based on the user input detected in step a) and a horizontal or vertical split of the area into two views separated by a splitter line having a defined thickness is performed depending on the determination made in said step. The splitting is assigned to a splitter instance identifier indicating a root splitter instance or a nested splitter instance and the root splitter instance or nested splitter instance is associated with a defined splitting ratio between the first and the second view (denoted as a₁ and b₁) and with the splitter line having the defined thickness. In one example, the splitter line is created by determining the split between the first and the second view and setting the total thickness of the splitter line half to a₁ and half to b₁ starting from the determined split. The splitter instance identifier is a unique identifier for each splitter instance generated in step b) and is indicative of the position of the respective splitter instance in the tree of splitter instances generated during the splitting operations. The splitter instance identifier thus allows to identify existing ancestor and descendant splitter instances of said splitter instance. Determination of whether the area is to be split horizontally or vertically may be made according to the executable instructions. In one example, a horizontal split is determined upon detecting a left mouse click, a left swipe or defined short cut combination while a vertical split is determined upon detecting a right mouse click, a right swipe or another defined short cut combination. In another example, a horizontal split is determined upon detecting a right mouse click, a right swipe or defined short cut combination while a vertical split is determined upon detecting a left mouse click, a left swipe or another defined short cut combination.

Step b) may further include detecting a user input being indicative of modifying at least one of the generated views, modifying the at least one view based on the detected user input and providing the modification for display within the area of the GUI. Modification of the view based on the user input may include modifying the defined splitting ratio used in step b) based on the detected user input, i.e. based on the detected position of the splitter line dragged by the user to the desired position. This allows the user to modify the defined splitting ratio after generation of the splitter instance. Detecting the user input may include detecting selection and dragging, for example via an interaction element such as a mouse, a trackball or a touchscreen gesture, of the splitter line associated with the splitter instance to a different position within the area of the GUI. Based on the position of the splitter line, the new splitting ratio of the respective views can be determined. The modification may be displayed in the area of the GUI in real-time such that the user can see the position of the splitter line during dragging of the line. This increases user comfort because the user gets direct feedback on his inputs, thus allowing the user to drag the line to the desired position without having to modify the position several times.

Step d) may further include detecting a predefined binary user input (=back or forth) being indicative of an undoing or redoing any operation performed in steps a) to c), performing the undoing or redoing operation based on the detected user input and providing the result of the undoing or redoing operation for display. The undoing or redoing of a performed splitting operation can be determined and performed based on the splitting instance identifiers mentioned previously. If more than one binary input being indicative of an undoing or redoing operation is detected, the number of binary inputs is determined, and this determination is used to perform the undoing or redoing operations.

Step d) may further include detecting a user input being indicative of modifying at least one of the generated views, modifying the at least one view based on the detected user input and providing the modification for display within the area of the GUI as described in relation with step b). The user may modify the generated view(s) upon each repetition or undoing or redoing of steps a) to c) or upon finishing repeating/undoing/redoing steps a) to c). This allows to the user to adapt the grid obtained upon repeating/undoing/redoing steps a) and b) to the specific needs of the user.

In step e), a user input being indicative of finishing generation of the grid is detected. After this user input is detected, only the splitting ratio can be further modified, i.e. no further splitting operations or modifications of the generated views apart from changing the splitting ratio are possible. Once the input has been detected in step e), all generated views can be used to place data object types.

Step f) may further include detecting a user input being indicative of modifying at least one view, modifying the view(s) based on the detected user input and providing the modification for display in the grid. A user input being indicative of modifying at least one view may include movement of an assigned data object from one view to another, movement of a tab being indicative of an assigned data object to another position in the row of tabs displayed in said view or selection of at least two assigned data objects within a view or in different views following by a user input being indicative of grouping said selected data objects. Modifying of the view(s) based on the aforementioned user input may include highlighting the selected data objects with a common color and/or numbering. Grouping of data objects allows displaying different data objects related to the same topic in different views. This provides a better overview of all data available for a specific topic to the user and thus increases user comfort.

The user input performed in at least one of steps a) to f), in particular at least the assigned splitter instance identifier(s) and the defined and/or modified splitting ratio(s) and optionally the assigned data object(s) and/or the splitter line thickness(es) and/or the view associated with each assigned data object and/or the grouping and highlighting of assigned data object(s), may be detected upon generation of the grid, the detected user input may be modified and the detected or modified user input may be provided as data associated with the grid via a communication interface to a data storage medium. The data associated with the grid may be interrelated with a unique grid identifier to allow retrieval of said data using the unique identifier. The grid identifier may be a text string, a numerical string or a combination.

"Communication interface" may refer to a software and/or hardware interface for establishing communication such as transfer or exchange or signals or data. Software interfaces may be e. g. function calls, APIs. Communication interfaces may comprise transceivers and/or receivers. The communication may either be wired, or it may be wireless. Communication interface may be based on or it supports one or more communication protocols. The communication protocol may a wireless protocol, for example: short distance communication protocol such as Bluetooth^{®}, or WiFi, or long distance communication protocol such as cellular or mobile network, for example, second-generation cellular network ("2G"), 3G, 4G, Long-Term Evolution ("LTE"), or 5G. Alternatively, or in addition, the communication interface may even be based on a proprietary short distance or long distance protocol. The communication interface may support any one or more standards and/or proprietary protocols. "Data storage medium" may refer to physical and other computer-readable media for carrying or storing computer-executable instructions and/or data structures. Such computer-readable media can be any available media that can be accessed by a general-purpose or special-purpose computer system. Computer-readable media may include physical storage media that store computer-executable instructions and/or data structures. Physical storage media include computer hardware, such as RAM, ROM, EEPROM, solid state drives ("SSDs"), flash memory, phase-change memory ("PCM"), optical disk storage, magnetic disk storage or other magnetic storage devices, or any other hardware storage device(s) which can be used to store program code in the form of computer-executable instructions or data structures, which can be accessed and executed by a general-purpose or special-purpose computer system to implement the disclosed functionality of the invention.

In another example, displaying the grid in step (i) comprises the following steps:
a. retrieving via a communication interface image data of the grid;
b. determining the number of splitter instances, the relation of the splitter instances, the splitting ratio of each splitter instance and the thickness of the splitter line of each splitter instance based on the retrieved image data of the grid;
c. generating the grid from the data determined in step b. and providing the generated grid for display within the area of the GUI;
d. detecting a user input being indicative of assigning at least one data object type provided by the dashboard software product to at least one view of the grid displayed in step c., assigning said data object type to the respective view and providing the assigned data object(s) for display in the respective views; and
e. optionally providing the data determined in step b. interrelated with the user input detected in step c. and/or d. as data associated with the grid via a communication interface to a data storage medium.

The image data of the grid may be retrieved from a data storage medium. The image data may be obtained by drawing the image of the grid using a computer program or by scanning a grid drawn on paper or by scanning a photo of the grid. Retrieving the image data may include checking the retrieved image data with respect to certain criteria, such as the resolution, the contrast, etc., to ensure that step b) can be performed .

In step b., the number of splitter instances, the relation of the splitter instances, the splitting ratio of each splitter instance and the thickness of the splitter line of each splitter instance is determined using the retrieved image data. This may be performed using image recognition techniques, for example by detecting pixels having a darker or lighter color and forming a rectangular around said detected pixels, machine learning techniques, deep learning techniques and/or artificial intelligence methods known in the state of the art.

The data determined in step b. is then used to generate the grid and the generated grid is provided for display within an area of the GUI of the dashboard software product in step c.. The area of the GUI where the grid is to be displayed may be predefined, such that further content, for example a header and/or footer mentioned previously can also be displayed within the GUI. Step c. may further include detecting a user input being indicative of splitting of the view(s) of the generated grid, for example by detecting a binary input described previously, and/or detecting a user input being indicative of modifying view(s), for example detecting movement of the splitter line as previously described. This allows the user to modify the displayed grid in case the number of determined splitter instances (i.e. the number of determined splitting operations) and/or the determined splitting ratio is not matching the expectations of the user or is not sufficiently matching the image data of the grid retrieved in step a..

In step d., a user input being indicative of assigning at least one data object type provided by the dashboard software product to at least one view of the grid obtained after step e) is detected, the selected data object type(s) is/are assigned to the respective view(s) based on the detected user input and the assigned data object(s) is/are provided for display within the respective view(s) of the grid. Reference is made to the previous disclosure with respect to suitable data object types. Detection of the user input being indicative of assigning at least one data object can be performed as previously disclosed. Step d. may further include detecting a user input being indicative of modifying the displayed views, for example by moving assigned data objects within a view or from one view to another or by selecting assigned data objects and grouping the selected data objects as previously described.

In optional step e., the data determined in step b. may be interrelated with the user input detected in steps c. and d. and may be provided as data associated with the grid via a communication interface to a data storage medium. The data associated with the grid may be interrelated with a unique grid identifier as described previously.

In yet another example, displaying the grid in step (i) includes retrieving via a communication interface data associated with the grid and displaying the grid based on the retrieved data. The data associated with the grid may have been obtained by performing steps a) to f) or a. to e. as described previously. The data associated with the grid may be provided by retrieving said data from the data storage medium, for example by selecting the appropriate electronic file containing said data using a browser.

In an aspect, the defined splitting ratio is a pre-defined splitting ratio or a user-modified splitting ratio of aₓ:bₓ with aₓ > 0, bₓ > 0 and x representing a splitter instance identifier assigned to the splitter instance associated with the splitting ratio. With particular preference, the pre-defined splitting ratio is fixed at ax=bx, such as ax=bx = 0.5, i.e. the two views obtained by splitting the area of the GUI or an already existing view are commensurate.

### Step (ii):

In step (ii) a user input to resize one view of the grid displayed in step (i) and at least part of the assigned data objects of said view is detected. In an aspect, the user input is detected via an interaction element. The interaction element may be selected from a physical interaction element, such as an input device or input/output device. In particular, the interaction element is selected from a mouse, a keyboard, a trackball, a touch screen or a combination thereof.

In an aspect, detecting the user input to resize one view and at least part of its assigned data objects in step (ii) comprises detecting a user input on a resize icon associated with the respective view. The resize icon may be displayed in the view that is to be resized, for example in the upper right corner of said view. In one example, each view of the displayed grid contains such a resize icon. In another example, the resize icon may only be displayed in a first part of the views present in the grid while it is absent in another part of the views present in the grid. This may, for example, be the case if the data objects assigned to the views of the second part cannot be resized.

### Step (iii):

In the first alternative of step (iii) of the inventive method, data associated with the grid is retrieved via a communication interface from a data storage medium

In one example, the data storage medium is an internal data storage medium of the one or more computer systems. This may be preferred if the grid displayed in step (i) is generated with steps a) to f) or a. to e. described previously and the user actions associated with the generation of the grid are stored in the internal data storage medium of the one of the computer systems . In another example, the data storage medium is a database connected to the one or more computer systems via a communication interface. "Database" may refer to a collection of related information that can be searched and retrieved. The database can be a searchable electronic numerical, alphanumerical, or textual document; a searchable PDF document; a Microsoft Excel^{®} spreadsheet; or a database commonly known in the state of the art. The database can be a set of electronic documents, photographs, images, diagrams, data, or drawings, residing in a computer readable storage media that can be searched and retrieved. A database can be a single database or a set of related databases or a group of unrelated databases. "Related database" means that there is at least one common information element in the related databases that can be used to relate such databases.

Retrieval of the data associated with the grid from a database may be preferred if the grid displayed in step (i) is generated with a) to f) or a. to e. described previously and the user actions associated with the generation of the grid are stored in a database or if the grid displayed in step (i) is generated using data associated with the grid, said data having been retrieved from a database prior to generating the grid, but the retrieved data was not stored in the internal data storage medium, thus rendering it necessary to retrieve said data again. The data associated with the grid may be interrelated with a unique ID to facilitate retrieval of said data from the internal storage medium or database using said unique ID. The unique ID may be provided by the user via a graphical user interface, for example by entering the unique ID or by selecting the appropriate data from a list of existing data.

In the second alternative of step (iii), data associated with the grid is determined based on the grid displayed in step (i). This may be preferred if data acquired upon generation of the grid (i.e. the data associated with the grid) was not stored on a data storage medium upon generation of the grid, for example upon performing steps a) to f) or a. to e. described previously. Data associated with the grid can be determined, for example, as previously described in relation to step b..

The data associated with the grid includes a splitter instance identifier for each splitter instance, the splitting ratio of each splitter instance and optionally the thickness of the splitter line associated with each splitter instance. In one example, the splitting ratio contained in the data associated with the grid is represented by a number tuple. In another example, the splitting ratio contained in the data associated with the grid is represented by a fraction which may have been normalized. The splitter instance identifier is preferably indicative of the chronological creation order of all splitter instances along each branch starting from the root splitter instance. The term "chronological creation order" refers to the order of splitting operations performed upon generation of the grid. If the area of the GUI is split for the first time, a root splitter instance associated with two views is generated. Each view can in turn be split again to create two further splitter instances and associated views. Thus, each view of the root splitter instance can be seen as a branch with serves as a basis for further splitting operations. Thus, the splitter instance identifier is a unique identifier for each splitter instance associated with the grid, i.e. each splitter instance contained in the provided or determined data associated with the grid. The splitter instance identifier of a nested splitter instance contains information on the ancestor splitter instance, the view of the ancestor splitter instance it was generated from and any existing descendant splitter instances of said view. Thus, the view of the ancestor splitter instance of said nested splitter instance and any existing descendant splitter instances of said view can be determined based on said splitter instance identifier.

In an aspect, the data associated with the grid may further include the data objects assigned to each view of each splitter instance, the view associated with each assigned data object, the grouping and highlighting of assigned data objects, or a combination thereof.

In an aspect, the data associated with the grid is generated during generation of the grid. For this purpose, the user input is detected upon generation of the grid, for example upon performing steps a) to f) or steps a. to e. described previously, and is compiled into the data associated with the grid, optionally after removing redundant detected user inputs as described previously.

The order of steps (ii) and (iii) is not critical. Thus, step (iii) can be performed prior to step (ii) or directly after step (ii).

### Step (iv):

In step (iv) of the inventive method, the view to be resized as well as the splitter instance associated with said view are determined w based on the user input detected in step (ii) and the data associated with the grid retrieved or determined in step (iii). For this purpose, the view associated with the user input detected in step (ii) is determined and the data associated with the grid may be used to identify the splitter instance associated with said view. The splitter instance may be identified using the splitter instance identifier associated with the determined view contained in the data associated with the grid.

Step (iv) can also be performed directly after step (ii), i.e. prior to step (iii).

### Step (v):

In step (v) of the inventive method, the view determined in step (iv) and at least part of its data objects is/are resized based on the retrieved or determined data associated with the grid and the determined splitter instance. In an aspect, the step of resizing the view determined in step (iv) and at least part of its assigned data objects includes:
(v-1) maximizing the view determined in step (iv) while minimizing the other view of the splitter instance determined in step (iv) and the thickness of the splitter line of said splitter instance;
(v-2) optionally minimizing the thickness of each splitter line associated with all descendent splitter instances of the view minimized in step (v-1);
(v-3) optionally repeating steps (v-1) and (v-2) for all or at least part of the ancestor splitter instances of the splitter instance determined in step (iv), wherein the view of each ancestor splitter instance is maximized upon repeating step (v-1) which is associated with the view of the descendant splitter instance maximized in step (v-1) and wherein the thickness of all splitter lines of all descendant splitter instances of each ancestor splitter instance associated with the view minimized in step (v-1) are minimized upon repeating step (v-2); and
(v-4) determining the aspect ratio of the maximized view of the root splitter instance and enlarging at least part of data objects assigned to the view determined in step (iv) from their initial aspect ratio to the determined aspect ratio of the maximized view.

Steps (v-1) to (v-3) can be performed in any order because the operations performed in said steps are not displayed to the user.

The term "maximizing the view" refers to modifying the splitting ratio aₓ:bₓ (with aₓ > 0 and bₓ > 0 and x representing a splitter instance identifier assigned to the splitter instance associated with the splitting ratio) of the splitter instance associated with the view to be maximized to a_{x_max} = ax+bx and bx_max = 0 or bx_max = ax+bx and a_{x_max} = 0. Modifying the splitting ratio such that one view is maximized automatically results in the other view of said splitter instance for which ax,max or bx,max is set to zero in being minimized.. Setting ax,max or bx,max for a respective view of the splitter instance to zero, i.e. minimizing said view, results in that the minimized view and all assigned data objects are no longer being displayed. Minimizing a view of a splitter instance also automatically results in that all views of all descendent splitter instances of the minimized view (i.e. all nested splitter instances generated from said view) and all data objects assigned to the views of said descendent splitter instances are also no longer be displayed without modifying the splitting ratio associated with said descendent splitter instances. This is due to the fact that said descendent splitter instances do not have any space for being displayed because ax,max or bx,max of the ancestor view they are resulting from has been set to zero. This allows to no longer display the views of all descendant splitter instances of a minimized ancestor view without modifying their splitting ratio, thus allowing to efficiently restore the splitting if desired without having to reset all splitting ratios.. The term "minimizing the splitter line thickness" refers to setting the thickness of the splitter line to zero such that the splitter line is no longer displayed. This avoids that splitter lines associated with all splitter instances are displayed at the edge of the area after the resizing operation.

In step (v-1), the view which is determined in step (iv) is maximized while minimizing the other view of the splitter instance determined in step (iv) and the thickness of the splitter line of said splitter instance. The term "minimizing the other view of the splitter instance" refers to the view of the splitter instance determined in step (iv), which is not to be resized, i.e. the view which is not associated with the user input detected in step (ii). Step (v-1) results in "reversing" the splitting associated with said splitter instance because the view assigned to the value ax_max = 0 or bx_max = 0 will no longer be displayed while the view assigned to the value ax_max = ax+bx or bx_max = ax+bx will be displayed in the area formerly occupied by both views.

Step (v-2) only needs to be performed if descendent splitter instances of the view which was minimized in step (v-1) are existing. The presence of any descendent splitter instances can be determined based on the splitter instance identifier associated with the splitter instance determined in step (iv). If this is the case, the thickness of the respective splitter lines associated with said descendent splitter instances is minimized, i.e. the thickness of the splitter line(s) is set to zero. All descendant splitter instances of the view minimized in step (v-1) include all nested splitter instances generated from said view, i.e. the splitter instance generated upon splitting said view and all nested splitter instances thereof. Setting the thickness of said splitter lines to zero results in said splitter lines being no longer displayed.

Optional step (v-3) is preferably performed if the splitter instance determined in step (iv) is not the root splitter instance or any other predefined splitter instance (such as a splitter instance defined by the user prior to starting the resizing operation), i.e. if the view to be maximized is not associated with the root splitter instance or with the predefined splitter instance. In that case, steps (vi-1) and (vi-2) are repeated for all or at least part of the ancestor splitter instances of the splitter instance determined in step (iv). Upon repeating step (v-1), the view of each ancestor splitter instance is maximized which is associated with the view of the descendant splitter instance maximized in step (v-1) or maximized upon repeating step (v-1). Upon repeating step (v-2), all thicknesses of all splitter lines associated with all descendant splitter instances of each ancestor splitter instance associated with the view of the descendant splitter instance minimized in step (v-1) or minimized upon repeating step (v-1) are minimized. The term "view of the ancestor splitter instance associated with the view maximized in step (v-1)" refers to the splitter instance used to generate the view which is maximized in step (v-1), i.e. the splitting from which the view maximized in step (v-1) originates, while the term "view of the ancestor splitter instance associated with the view minimized in step (v-1)" refers to the splitter instance which is used to generate the view minimized in step (v-1), i.e. the splitting from which the view minimized in step (v-1) originates. The ancestor splitter instance of the splitter instance determined in step (iv) can be determined using the splitter instance identifier as previously described. Upon identification of said splitter instance, the view of the ancestor splitter instance associated with the view maximized in step (v-1) and the view of the ancestor splitter instance associated with the view minimized in step (v-1) are determined. Afterwards, step (v-1) is repeated, and the view of the ancestor splitter instance associated with the view maximized in step (v-1) is maximized while the other view of said ancestor splitter instance and the thickness of the splitter line of said ancestor splitter instance is minimized. Then, the descendant splitter instances of the view of the ancestor splitter instance which is minimized upon repeating step (v-1) is determined and step (v-2) is repeated for all determined descendant splitter instances. Display of the result after each step (v-3) results in displaying the view of the grid obtained prior to performing the splitting operation associated with the ancestor splitter instance of the ancestor splitter instance determined in step (v-3).

In case the view to be maximized is associated with the root splitter instance, performing step (v-1) and optional step (vi-2) will already result in a view and at least part of its assigned data objects resized to the aspect ratio of the area of the GUI, i.e. a view and at least part of its assigned data object(s) fully occupying the area of the GUI which was occupied by the grid displayed in step (i) so that no further maximization operations are necessary. This is due to the fact that upon minimizing one view of the root splitter instance in step (v-1), all views of all descendant splitter instances thereof, as well as all thicknesses of all splitter lines associated with the minimized splitter instances are minimized, i.e. said views as well as the associated data objects and splitter lines are no longer displayed.

Repeating steps (v-1) and (v-2) for all or at least part of the ancestor splitter instances of the splitter instance determined in step (iv) may include:
a) determining the view of the ancestor splitter instance associated with the view of the descendant splitter instance maximized in step (v-1),
b) maximizing the view of the ancestor splitter instance determined in step a) while minimizing the other view of said ancestor splitter instance and the thickness of the splitter line associated with said ancestor splitter instance,
c) minimizing the thickness of all splitter lines of all descendant splitter instances of the view minimized in step b), and
d) repeating steps a) to c) for all or at least part of the further ancestor splitter instances of the view of the ancestor splitter instance determined in step a).

Step a) can be performed based on the data associated with the grid retrieved or determined in step (iii) using the splitter instance identifier of the splitter instance determined in step (iv) by determining the previous level in the splitter instance tree, i.e. the splitter instance above the splitter instance determined in step (iv). Step b) can be performed as described previously in relation to step (v-1). In step c), all thicknesses of all splitter lines of all descendant splitter instances of the view of the ancestor splitter instance minimized in step b) are minimized. This ensures that the splitter lines are no longer displayed in the grid. In case the ancestor splitter instance is the root splitter instance, minimizing one of the two views of the root splitter instance results in minimizing all descendent views of said minimized root splitter instance view so that these descendent views are no longer displayed within the grid. Repeating steps a) to c) for all ancestor splitter instances of the splitter instance view determined in step a) ensures that each view of each ancestor splitter instance not associated with the ancestor splitter instance view to be maximized is no longer displayed in the GUI.

In step (v-4), the aspect ratio of the maximized view of the root splitter instance is determined and at least part of the data objects assigned to the view determined in step (iv) are enlarged from the initial aspect ratio of at least part of the assigned data objects to the determined aspect ratio of the maximized view.

### Step (vi):

In step (vi), the resized view and at least part of its assigned data objects are displayed in the area of the GUI being displayed on the display.

Steps (ii) to (vi) allow an efficient method to resize, in particular enlarge, a view and at least part of its assigned data objects of a grid by determining the splitter instance associated with the view to be resized and modifying the splitting ratio of said splitter instance as well as the splitting ratios of all further existing ancestor splitter instances associated with said view to be resized such that the view and at least part of its assigned data objects are displayed within the area of the GUI prior to performing the first splitting operation. Since the splitting ratio of all descendant splitter instances of the views minimized during each resizing operation is not modified, said splitting ratios do not have to be restored upon restoring the original view of the grid, i.e. the view of the grid displayed in step (i).

### Further steps:

In an aspect, the method further includes the following steps:
(vii) detecting a user input to restore the view of the grid to the grid displayed in step (i), and
(viii) restoring the grid based on the retrieved or determined data associated with the grid.

The restoration process triggers a second cascade of signals starting from the root splitting instance and going to the source splitter instance of the previous maximizing process. Since the splitting ratio of all descendent splitter instances of the minimized view of the root splitter instance remains unaltered during the maximization process, it is sufficient to restore the splitting ratio of the root splitter instance because this triggers use of the unmodified splitting ratio of all descendant splitter instances upon restoring the display view of step (i). The same principle applies to all descendant splitter instances of the views of each splitter instance minimized in step (vi). This allows to efficiently restore the view of the grid to the grid displayed in step (i) while keeping all dedicated views unaltered regarding their configuration, thus avoiding the generation and configuration of a new instance (e.g. to visualize a maximized representation of the respective view).

### Step (vii):

Detecting the user input to restore the view of the grid to the grid displayed in step (i) may comprise detecting a user input on a resize icon associated with the resized view. The resize icon may be displayed in the resized view, for example in the upper right corner of said resized view. Detecting the user input may be performed as described in relation to step (ii).

### Step (viii):

Restoring the grid may include:
(viii-1) restoring the splitting ratio of the root splitting instance to the value contained in the retrieved or determined data associated with the grid and restoring the splitter line thickness of the root splitter instance,
(viii-2) determining the descendant splitter instance of the root splitter instance for which the splitting ratio was adjusted during step (v) and restoring the splitting ratio of said descendant splitter instance to the value contained in the retrieved or determined data associated with the grid and restoring the splitter line thickness of the root splitter instance,
(viii-3) optionally repeating step (viii-2) for all descendant splitter instances of the splitter instance determined in step (viii-2) for which the splitting ratio was modified in step (v), and
(viii-4) providing all resized views and assigned data objects for display in the area of the GUI.

Step (viii-1) may include retrieving the splitting ratio interrelated with the splitter instance identifier for each splitter instance and optionally the thickness of the splitter line associated with each splitter instance of the grid from the retrieved or determined data associated with the grid. If the splitter line thickness is not contained in the retrieved or determined data, a predefined value for the splitter line thickness may be used. Retrieving said data may include interrelating the splitting ratio and retrieved/predefined splitter line thickness with the respective splitter instance identifier and generating a tree representation based on the retrieved data. Performing step (viii-1) results in display of the two views associated with the root splitter instance (i.e. the first splitting performed upon generation of the grid) split by a splitter line because the view of the root splitter instance for which ax,max or bx,max has been set to zero in step (v) is now restored to its original value, thus resulting in display of said view. This automatically results in display of all views of all descendant splitter instances of the root splitter instance which was minimized, because ax,max or bx,max of the associated view of the root splitter instance is no longer set to zero and the splitting ratio of said descendent splitter instances was not modified in step (v).

The descendant splitter instance of the root splitter instance for which the splitting ratio was modified in step (v) can be determined using the splitter instance identifier and the associated splitting ratio by comparing the retrieved splitting ratio with the current splitting ratio since the splitting ratio of the descendant splitter instance of only one view of the root splitter instance was modified during step (v) while the splitting ratio of the descendant splitter instances of the other view of the root splitter instance was not modified as previously described.

Step (viii-2) has to be repeated for all descendant splitter instances for which the splitting ratio was modified in step (v), i.e. going down from the root splitter instance to the source splitter instance which is associated with the user input detected in step (ii) (i.e. the splitter instance associated with the view and at least part of the assigned data object(s) resized in step (v)). Since the splitting ratio of all descendant splitter instances of the minimized view of the source splitter instance was not modified in step (v), restoration of the splitting ratio of the source splitter instance automatically leads to a display of all descendant splitter instances of the source splitter instance. This allows to efficiently restore the grid displayed in step (i).

The grid displayed after step (viii-4) resembles the grid displayed in step (i) such that the original view of the grid is fully restored. In principle, the inventive method can be performed again with the same view or a different view.

### Further embodiments or aspects:

Further embodiments or aspects are set forth in the following numbered clauses:
1. A computer-implemented method for resizing a view and at least part of its assigned data objects of a grid displayed in an area of a graphical user interface (GUI) of a dashboard software product, said method comprising:
   under the control of one or more computer system configured with executable instructions, at least one computer system comprising a display,
   (i) displaying on the display the GUI comprising the grid containing at least two views and at least one data object assigned to at least one of the views, wherein the grid has been generated by splitting an area of the GUI horizontally or vertically in at least two views and assigning at least one data object type to the generated views, each splitting being assigned to a splitter instance having a defined splitting ratio between the first and the second view associated with said splitter instance;
   (ii) detecting a user input to resize one of the views displayed in step (i);
   (iii) retrieving via a communication interface data associated with the grid from a data storage medium or determining data associated with the grid based on the grid displayed in step (i), wherein the data associated with the grid contains the splitting ratio of each splitter instance of the grid, the splitter instance identifier of each splitter instance of the grid and optionally the splitter line thickness associated with each splitter instance of the grid;
   (iv) determining the view to be resized and the splitter instance associated with said view based on the detected user input and the retrieved or determined data associated with the grid;
   (v) resizing the view determined in step (iv) and at least part of its assigned data objects based on the retrieved or determined data associated with the grid and the determined splitter instance; and
   (vi) displaying on the display the resized view and at least part of its assigned data objects in the area of the GUI.
2. The method according to clause 1, wherein resizing the view and at least part of the assigned data object comprises increasing the aspect ratio of the view and at least part of the assigned data objects compared to the initial aspect ratio of the view and at least part of its assigned data objects and/or decreasing the current aspect ratio of the view and at least part of its assigned data object to the initial aspect ratio of said view and at least part of its assigned data objects.
3. The method according to clause 1 or 2, wherein the data object and corresponding data object type is selected from the group consisting of numbers, text, symbols, tables, diagrams, pictures, color data of a coating layer, appearance data of a coating layer, thickness data of a coating layer, topographic surface data of a coating layer, or a combination thereof.
4. The method according to any one of the preceding clauses, wherein the dashboard software product is a colorimetry software product.
5. The method according to any one of the preceding clauses, wherein each splitter instance is assigned to a splitter instance identifier being indicative of a root splitter instance or a nested splitter instance.
6. The method according to any one of the preceding clauses, wherein displaying the grid in step (i) comprises the following steps:
   a) detecting a binary user input consisting of a selection of whether the area is to be split horizontally or vertically;
   b) determining whether the area is to be split horizontally or vertically based on the user input detected in step a) and performing a horizontal or vertical split into two views separated by a splitter line having a defined thickness depending on the determination, the splitting being assigned to a splitter instance identifier indicating a root splitter instance or a nested splitter instance and the root splitter instance or the nested splitter instance being associated with a defined splitting ratio between the first and the second view and with the splitter line have the defined thickness;
   c) providing the views generated from the splitting performed in step b) for display within the area of the GUI;
   d) optionally repeating steps a) and b) for at least one generated view;
   e) detecting a user input being indicative of finishing generation of the grid;
   f) detecting a user input being indicative of assigning at least one data object type provided by the dashboard software product to at least one view of the grid obtained after step e), assigning said data object type(s) to the respective view(s) providing the assigned data object(s) for display in the respective views of the grid.
7. The method according to clause 6 wherein step a) comprises detecting a selection of the area via a user input prior to detecting a binary user input being indicative of a horizontal split of the selected area or a vertical split of the selected area.
8. The method according to clause 7, wherein the binary user input is a left or right mouse click, a left or right touchscreen gesture or a short cut combination.
9. The method according to clause 7 or 8, further including detecting a user input in step b) or d) being indicative of modifying at least one of the generated views, modifying the at least one view based on the detected user input and providing the modification for display within the area of the GUI.
10. The method according to any one of clauses 7 to 9, further comprising detecting the user input performed in at least one of steps a) to f), in particular detecting at least the associated splitter instances identifier(s) and the defined and/or modified splitting ratio(s) and optionally the assigned data object(s) and/or the splitter line thickness(es) and/or the view associated with each assigned data object and/or the grouping and highlighting of assigned data object(s) upon generation of the grid, optionally modifying the detected user input and providing the detected or modified user input as data associated with the grid via a communication interface to a data storage medium.
11. The method according to any one of clauses 1 to 5, wherein displaying the grid in step (i) comprises the following steps:
   a. retrieving via a communication interface image data of the grid;
   b. determining the number of splitter instances, the relation of the splitter instances, the splitting ratio of each splitter instance and the thickness of the splitter line of each splitter instance based on the retrieved image data of the grid;
   c. generating the grid from the data determined in step b. and displaying the generated grid within the area of the GUI;
   d. detecting a user input being indicative of assigning at least one data object type provided by the dashboard software product to at least one view of the grid displayed in step c., assigning said data object type to the respective view and providing the assigned data object(s) for display in the respective views; and
   e. optionally providing the data determined in step b. interrelated with the user input detected in step c. and/or d. data associated with the grid via a communication interface to a data storage medium.
12. The method according to any one of clauses 1 to 5, wherein displaying the grid in step (i) includes retrieving via a communication interface data associated with the grid and displaying the grid based on the retrieved data.
13. The method according to any one of the preceding clauses, wherein the defined splitting ratio is a pre-defined splitting ratio or a user-modified splitting ratio of ax:bx with ax > 0, bx > 0 and x representing a splitter instance identifier assigned to the splitter instance associated with the splitting ratio.
14. The method according to any one of the preceding clauses, wherein the user input is detected via an interaction element.
15. The method according to clause 14, wherein the interaction element is selected from a physical interaction element, such as an input device or input/output device, in particular a mouse, a keyboard, a trackball, a touch screen or a combination thereof.
16. The method according to any one of the preceding clauses, wherein detecting the user input to resize one view and at least part of its assigned data objects in step (ii) comprises detecting a user input on a resize icon associated with the respective view.
17. The method according to any one of the preceding clauses, wherein the data associated with the grid further includes the data object assigned to each view of each splitter instance, the dedicated instance of view associated with each assigned data object, the grouping and highlighting of assigned data object(s) or a combination thereof.
18. The method according to any one of the preceding clauses, wherein the splitter instance identifier is indicative of the chronological creation order of all splitter instances along each branch starting from the root splitter instance.
19. The method according to any one of the preceding clauses, wherein the data associated with the grid is generated during generation of the grid.
20. The method according to any one of the preceding clauses, wherein the data storage medium is an internal data storage medium of the one or more computer systems or is a database connected to the one or more computer systems via a communication interface.
21. The method according to any one of the preceding clauses, wherein the step of resizing the view determined in step (iv) and at least part of its assigned data objects includes:
   (v-1) maximizing the view determined in step (iv) while minimizing the other view of the splitter instance determined in step (iv) and the thickness of the splitter line of said splitter instance;
   (v-2) optionally minimizing the thickness of each splitter line associated with all descendent splitter instances of the view minimized in step (v-1);
   (v-3) optionally repeating steps (v-1) and (v-2) for all or at least part of the ancestor splitter instances of the splitter instance determined in step (iv), wherein the view of each ancestor splitter instance is maximized upon repeating step (v-1) which is associated with the view of the descendant splitter instance maximized in step (vi-1) and wherein the thickness of all splitter lines of all descendant splitter instances associated with the view minimized in step (v-1) are minimized upon repeating step (v-2); and
   (v-4) determining the aspect ratio of the maximized view of the root splitter instance and enlarging at least part of the data objects assigned to the view determined in step (iv) from their initial aspect ratio to the determined aspect ratio of the maximized view.
22. The method according to clause 21, wherein minimizing the thickness of the splitter line in steps (v-1) to (v-3) includes setting the thickness of the splitter line to zero.
23. The method according to clause 21 or 22, wherein maximizing the view includes setting the splitting ratio of ax:bx - with ax > 0, bx > 0 and x representing a splitter instance identifier assigned to the splitter instance associated with the splitting ratio - of the splitter instance determined in step (iv) or the ancestor splitter instance(s) determined in step (vi-3) to ax_max = ax+bx and bx_max = 0 or bx_max = aₓ+bₓ and a_{x_max} = 0.
24. The method according to any one of clauses 21 to 23, wherein repeating steps (v-1) and (v-2) for all or at least part of the ancestor splitter instances of the splitter instance determined in step (iv) includes:
   a) determining the view of the ancestor splitter instance of the splitter instance associated with the view of the descendant splitter instance maximized in step (v-1),
   b) maximizing the view of the ancestor splitter instance determined in step a) while minimizing the other view of said ancestor splitter instance and the thickness of the splitter line associated with said ancestor splitter instance,
   c) minimizing the thickness of all splitter lines of all descendent splitter instances of the view minimized in step b), and
   d) repeating steps a) to c) for all or at least part of the further ancestor splitter instances of the view of the ancestor splitter instance determined in step a).
25. The method according to any one of the preceding clauses further including the following steps:
   (vii) detecting a user input to restore the view of the grid to the grid displayed in step (i), and
   (viii) restoring the grid based on the retrieved or determined data associated with the grid.
26. The method according to clause 25, wherein detecting the user input to restore the view of the grid to the grid displayed in step (i) comprises detecting an input on a resize icon associated with the resized view.
27. The method according to clause 25 or 26, wherein restoring the grid includes
   (viii-1) restoring the splitting ratio of the root splitting instance to the value contained in the retrieved or determined data associated with the grid and restoring the splitter line thickness of the root splitter instance,
   (viii-2) determining the descendant splitter instance of the root splitter instance for which the splitting ratio was adjusted during step (v), restoring the splitting ratio of said descendant splitter instance to the value contained in the retrieved or determined data associated with the grid and restoring the splitter line thickness of said descendant splitter instance,
   (viii-3) optionally repeating step (viii-2) for all descendant splitter instances of the splitter instance determined in step (viii-2) for which the splitting ratio was modified in step (v) and
   (viii-4) providing all resized views and assigned data objects for display in the area of the GUI.
28. A computer apparatus for resizing a view and at least part of its assigned data objects of a grid displayed in an area of a graphical user interface (GUI) of a dashboard software, said system comprising:
   - a display configured to display the GUI comprising the grid containing at least two views and at least one data object assigned to at least one of the views and to display the resized view and at least part of its assigned data objects in the area of the GUI;
   - an interaction element configured to detect a user input to resize a view and at least part of its assigned data objects of the displayed grid;
   - one or more computing nodes; and
   - one or more computer-readable media having thereon computer-executable instructions that are structured such that, when executed by the one or more computing nodes, cause the apparatus to perform the steps according to any one of clauses 1 to 28.
29. A non-transitory computer-readable storage medium, the computer-readable storage medium including instructions that when executed by one or more processors of a computer system, cause the computer system to perform the steps according to the method of any of clauses 1 to 27.
30. Use of the method of any of clauses 1 to 27 in a dashboard software product, in particular in a colorimetry software.

### BRIEF DESCRIPTION OF THE DRAWINGS

These and other features of the present invention are more fully set forth in the following description of exemplary embodiments of the invention. To easily identify the discussion of any particular element or act, the most significant digit or digits in a reference number refer to the figure number in which that element is first introduced. The description is presented with reference to the accompanying drawings in which:
- FIG. 1: illustrate a schematic drawing of a tree structure obtained during generation of the grid by performing a plurality of splitting operations in an area of the graphical user interface;
- FIG. 2: illustrate a flow diagram of a first embodiment of the inventive method for resizing a view and at least part of the assigned data objects of a grid displayed in a graphical user interface (GUI) of a dashboard software product;
- FIGs. 3A, 3B: illustrate a flow diagram representing different embodiments for displaying the grid in block 202 of FIG. 2 in accordance with implementations of the invention;
- FIG. 4: illustrates a flow diagram representing an embodiment of resizing the view and at least part of its assigned data objects as described in block 214 of FIG. 2 in accordance with implementations of the invention;
- FIG. 5: illustrates a flow diagram of a second embodiment of the inventive method for resizing a view and at least part of the assigned data objects of a grid displayed in a graphical user interface (GUI) of a dashboard software product;
- FIG. 6: illustrates a block diagram of an apparatus for resizing a view and at least part of the assigned data objects of a grid displayed in a graphical user interface (GUI) of a dashboard software product in accordance with implementations of the invention;
- FIG. 7: illustrates a client-server environment for a dashboard software product allowing to resize a view and at least part of the assigned data objects of a grid displayed in a graphical user interface (GUI) of the dashboard software product in accordance with implementations of the invention;
- FIG. 8: is a planar view of a grid comprising a plurality of views and assigned data objects;
- FIG. 9: is a planar view of a resized view and at least part of the assigned data objects of the grid of FIG. 9.

### DETAILED DESCRIPTION

The detailed description set forth below is intended as a description of various aspects of the subject-matter and is not intended to represent the only configurations in which the subject-matter may be practiced. The appended drawings are incorporated herein and constitute a part of the detailed description. The detailed description includes specific details for the purpose of providing a thorough understanding of the subject-matter. However, it will be apparent to those skilled in the art that the subject-matter may be practiced without these specific details.

In one case, the illustrated separation of various parts in the figures into distinct units may reflect the use of corresponding distinct physical and tangible parts in an actual implementation. Alternatively, or in addition, any single part illustrated in the figures may be implemented by plural actual physical parts. Alternatively, or in addition, the depiction of any two or more separate parts in the figures may reflect different functions performed by a single actual physical part.

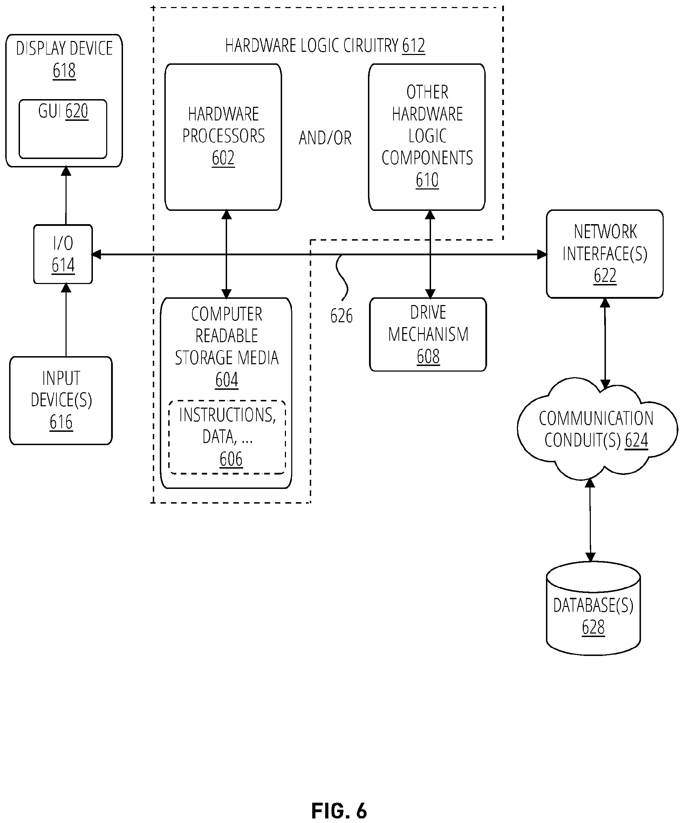

Other figures describe the concepts in flowchart form. In this form, certain operations are described as constituting distinct blocks performed in a certain order. Such implementations are illustrative and non-limiting. Certain blocks described herein can be grouped together and performed in a single operation, certain blocks can be broken apart into plural component blocks, and certain blocks can be performed in an order that differs from that which is illustrated herein (including a parallel manner of performing the blocks). In one implementation, the blocks shown in the flowcharts that pertain to processing-related functions can be implemented by the hardware logic circuitry described in relation to Fig. 6, which, in turn, can be implemented by one or more hardware processors and/or other logic components that include a task-specific collection of logic gates.

As to terminology, the phrase "configured to" encompasses various physical and tangible mechanisms for performing an identified operation. The mechanisms can be configured to perform an operation using the hardware logic circuitry described in relation to Fig. 6. The term "logic" likewise encompasses various physical and tangible mechanisms for performing a task. For instance, each processing-related operation illustrated in the flowcharts corresponds to a logic component for performing that operation. A logic component can perform its operation using the hardware logic circuitry as described in relation to FIG. 6. When implemented by computing equipment, a logic component represents an electrical component that is a physical part of the computing system, in whatever manner implemented.

Any of the storage resources described herein, or any combination of the storage resources, may be regarded as a computer-readable medium. In many cases, a computer-readable medium represents some form of physical and tangible entity. The term computer-readable medium also encompasses propagated signals, e.g., transmitted or received via a physical conduit and/or air or other wireless medium, etc. However, the specific term "computer-readable storage medium" expressly excludes propagated signals per se, while including all other forms of computer-readable media.

The following explanation may identify one or more features as "optional." This type of statement is not to be interpreted as an exhaustive indication of features that may be considered optional; that is, other features can be considered as optional, although not explicitly identified in the text. Further, any description of a single entity is not intended to preclude the use of plural such entities; similarly, a description of plural entities is not intended to preclude the use of a single entity. Further, while the description may explain certain features as alternative ways of carrying out identified functions or implementing identified mechanisms, the features can also be combined together in any combination. Finally, the terms "exemplary" or "illustrative" refer to one implementation among potentially many implementations.

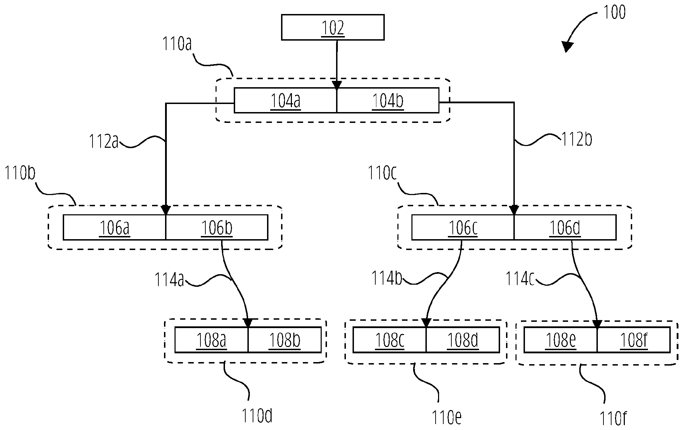

FIG. 1 depicts a schematic drawing of a tree structure obtained during generation of a grid containing a plurality of views by performing a plurality of splitting operations in an area of a GUI shown on the screen of a display device. In this example, the tree structure is obtained during generation of the grid, for example by detecting binary inputs performed by a user and splitting the respective area according to the detected binary inputs. In this example, each splitting operation results in commensurate views, for example by using a splitting ratio of ax = bx, such as ax = bx = 0.5 (with and x representing a splitter instance identifier assigned to the splitter instance associated with the splitting ratio). In another example, each splitting operation results in non-commensurate views. In this example, the area as well as each generated view is split horizontally. In another example, the area as well as each generated view is split vertically. In yet another example, the area as well as each generated view is either split horizontally or vertically. In this example, 6 splitting operations are performed, and each generated view is split once gain. In another example, less or more splitting operations are performed. The splitting operations may be performed at the same branch starting from the root splitter instance or at both branches.

Generation of the grid starts in area 102 of the GUI in which the grid is to be displayed. Area 102 is not split, i.e. no splitting operation has been performed yet.

Upon performing a splitting operation in area 102 of the GUI, two views 104a and 104b are generated which are associated with a defined splitting ratio a₁:b₁ and a splitter line having a defined thickness to visualize the splitting of the views. Views 104a and 104b are associated with splitter instance 110a. The splitter instance 110a is the root splitter instance because it does not have any ancestor splitter instance (i.e. any splitting instance generated prior to splitting instance 110a) related to it. A unique splitter instance identifier, such as a number, a text string or a combination thereof, can be assigned to said splitter instance upon its generation.

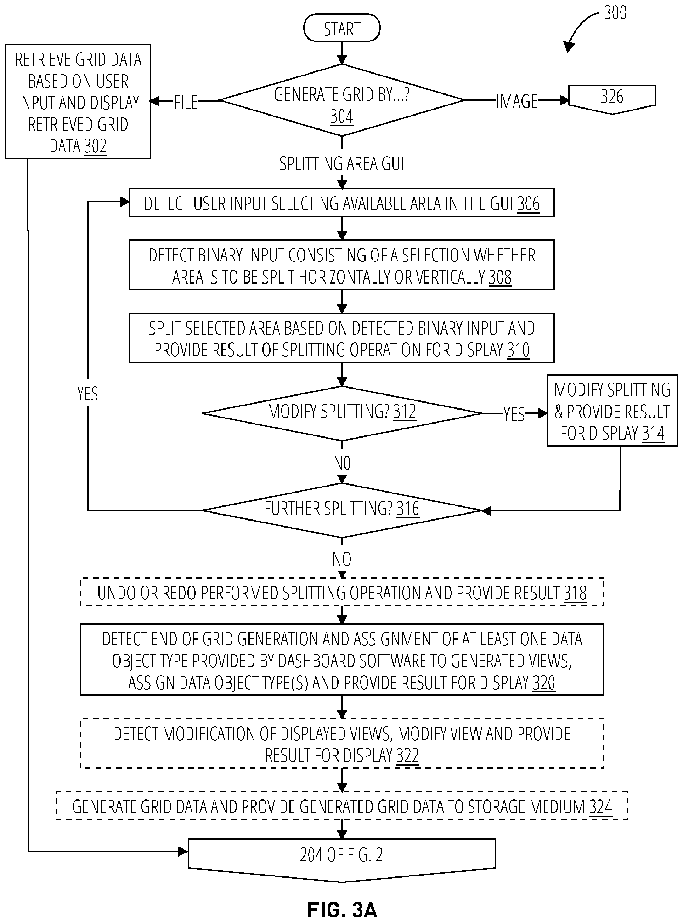

Splitting of view 104a generates views 106a and 106b in a defined splitting ratio a_{2.1}:b_{2.1} and being separated by a splitter line having a defined thickness. Views 106a and 106b are associated with splitter instance 110b. Splitter instance 110b is a descendent or nested splitter instance of view 104a of root splitter instance 110a. A unique splitter instance identifier can be assigned to said splitter instance upon its generation as previously mentioned. The identifier may be chosen such that it indicates the relation of splitter instance 110b to the respective view of the root splitter instance 110a. Splitter instance 110b and associated views 106a, 106b are connected to view 104a of root splitter instance 102 via branch 112a. From root splitter instance 102, two branches 112a and 112b are extending from views 104a and 104b of root splitter instance 110a to descendant splitter instances 110b and 110c. Splitting of each descendent splitter instance 110a, 110b leads to further branching of branches 112a and 112b as described hereinafter. Data object types provided by the dashboard software product can be assigned to the generated views as described in relation to FIG. 3A later on.

In this example, view 106a is not split again. In another example, view 106 may be split at least once. Splitting of view 106b generates splitter instance 110d and views 108a and 108b in a defined splitting ratio a_{3.2}:b_{3.2} being separated by a splitter line having a defined thickness. Splitter instance 110d is a descendent or nested splitter instance of view 106b of nested splitter instance 110b and is also be called a leave splitter instance, because no further splitting operations have been performed in this example and thus no further nested splitter instances of views 108a and 108b are existing. A unique splitter instance identifier can be assigned to said splitter instance upon its generation as described previously. The identifier may be chosen such that it indicates the relation of splitter instance 110d to view 106b of ancestor splitter instance 110b and view 104a of root splitter instance 110a. Splitter instance 110d and associated views 108a, 108b are connected to ancestor splitter instance 110b and its view 106a via branch 114a. Splitter instances 110b, 110c are descendant splitter instances of root splitter instance 110a. In turn, splitter instances 110a and 110b are ancestor splitter instances of splitter instance 110d.

Splitting of view 104b generates views 106c and 106d, splitter instance 110c and branch 112b as described in relation to splitting of view 104a.

Splitting of view 106c generates views 108e and 108f, splitter instance 110f and branch 114c as described in relation to splitting of view 106a. Splitting of view 106d generates views 108g and 108h, splitter instance 110g and branch 114d as described in relation to splitting of view 106b.

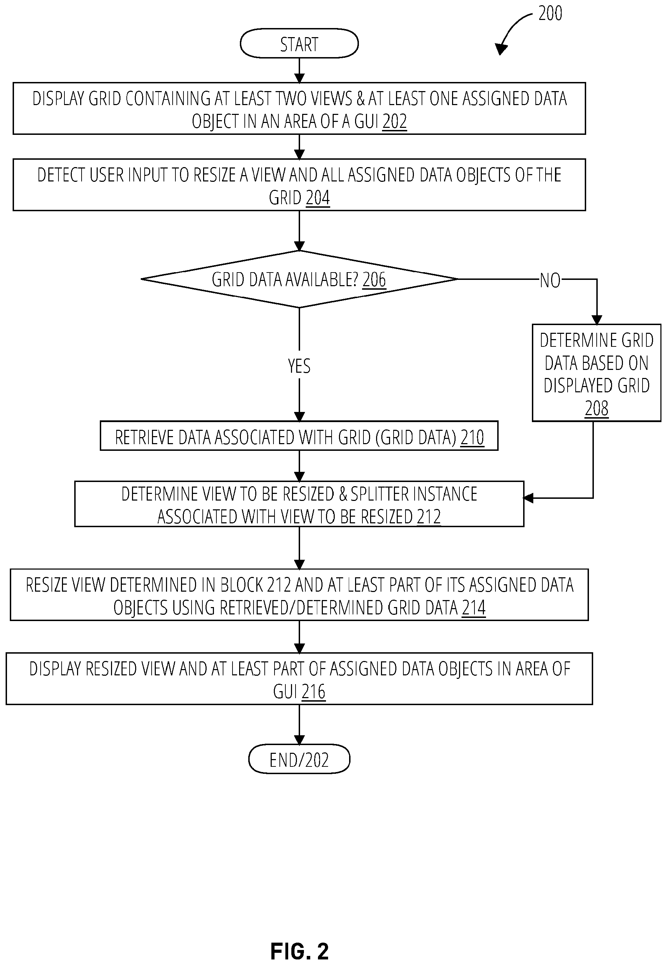

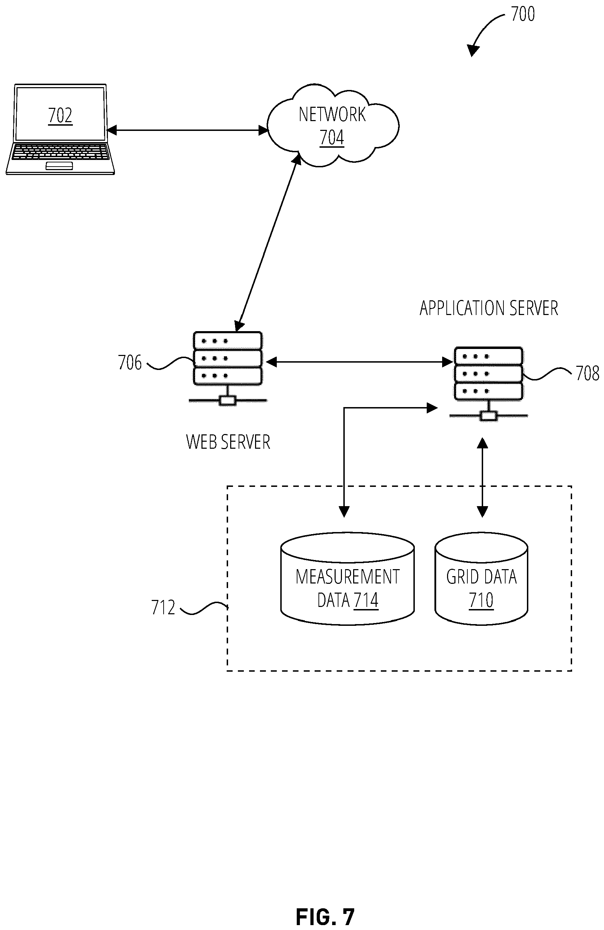

FIG. 2 depicts a first non-limiting embodiment of a method 200 for resizing a view and at least part of its assigned data objects of a grid displayed in an area of a graphical user interface (GUI) of a dashboard software product. In this example, the dashboard software product is a colorimetry software. The GUI is displayed on the screen of an electronic device, such as a mobile electronic device or a stationary electronic device. Method 200 may be implemented using the computing apparatus described in relation to FIG. 6 or the system described in relation to FIG. 7 later on. In this example, the GUI further comprises, apart from the area with the grid, a quick start button bar, a standard header and a standard footer. The quick start button bar is pinned at an arbitrary position at the edge of the area. In this example, the view and all assigned data objects are resized by maximizing the initial aspect ratio of the view an at least part of its assigned data objects to the aspect ratio of the area..

In block 202, the routine implementing method 200 displays a grid containing at least two views and at least one data object assigned to one of the views in the area of the GUI. Each view and all assigned data object comprise an initial aspect ratio. The initial aspect ratio of the view corresponds to the splitting ratio associated with the respective view. In this example, the initial aspect ratio of each data object assigned to the view also corresponds to the splitting ratio associated with the respective view (i.e. the size of each data object corresponds to the size of the view). In another example, the initial aspect ratio of each data object assigned to the view is smaller than the initial aspect ratio of the view (i.e. if the size of each data object is smaller than the size of the view). In this example, the assigned data objects are selected from numbers, text, symbols, tables, diagrams, pictures, measured data obtained by a colorimetry software or a combination thereof.

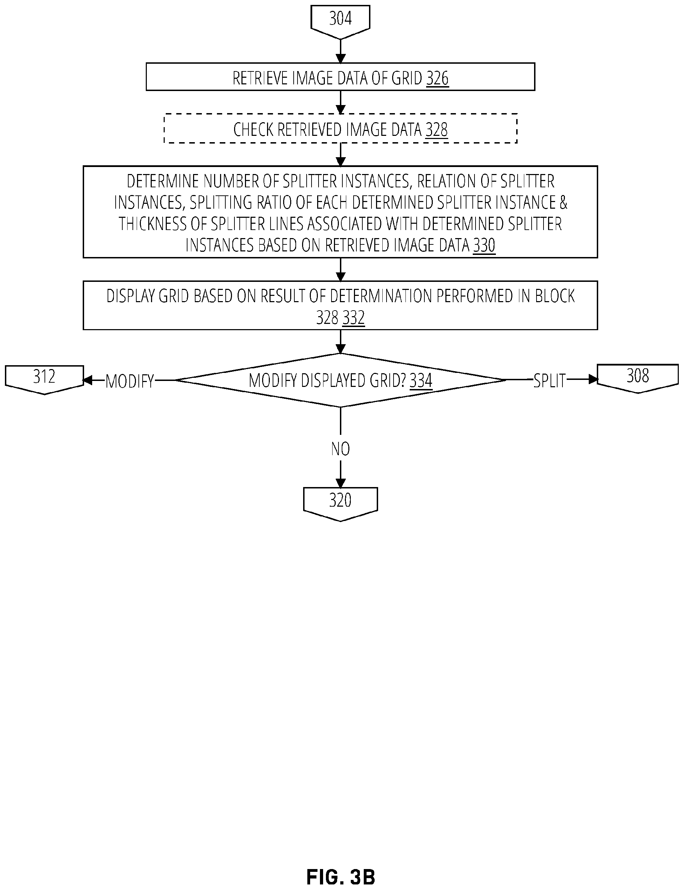

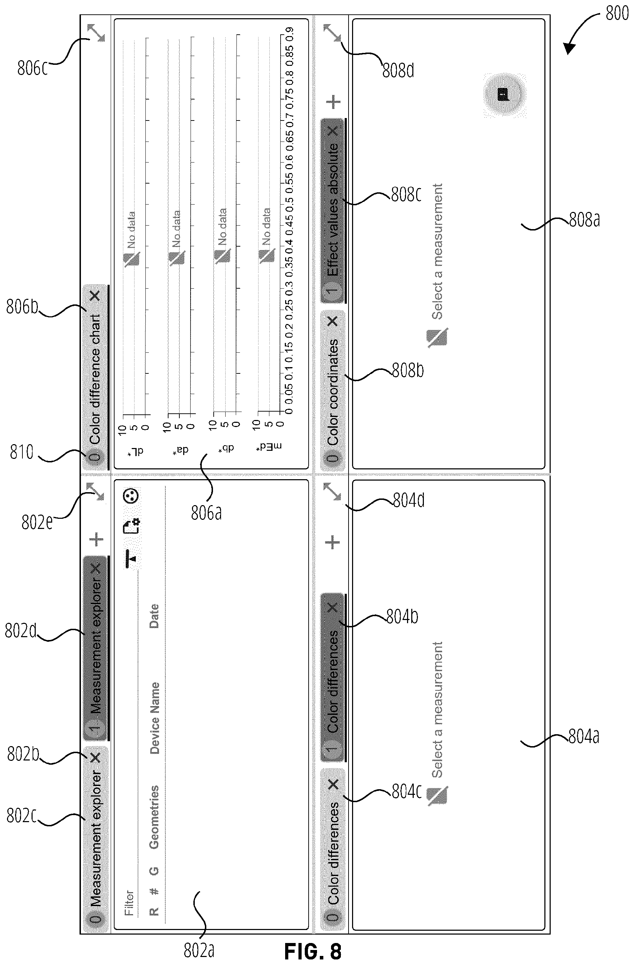

In this example, the grid displayed in block 202 is generated by method 300 described in relation to FIGs. 3A and 3B. An example of a grid displayed in block 202 of FIG. is described in relation to FIG. 8 later on.

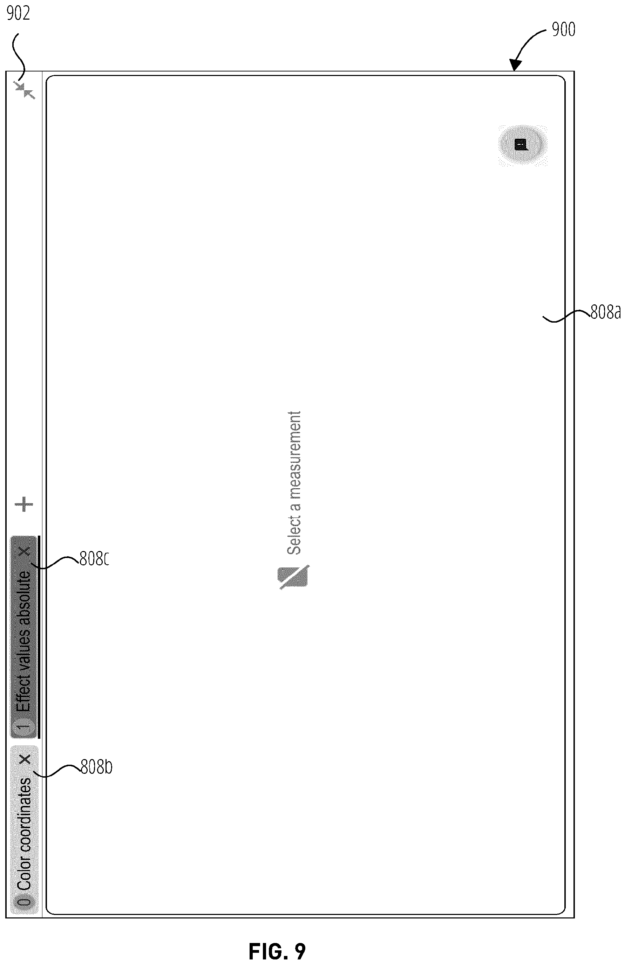

In block 204, the routine implementing method 200 detects a user input to resize, i.e. maximize, a view and at least part of its assigned data objects of the grid displayed in block 202. In this example, the user input is detected via an interaction element, such as an input device or input/output device. The user input may comprise selecting a resize icon (see 902e, 904d, 906c, 908d of FIG. 9) associated with the view to be maximized by using a mouse, trackball, touchscreen gesture or a defined short cut combination.

In block 206, the routine implementing method 200 determines whether data associated with the grid (also called grid data hereinafter) displayed in block 202 is available, for example stored on a data storage medium. This determination may be made using a grid identifier being indicative of the displayed grid and searching for the grid data based on the grid identifier on a data storage medium. The grid identifier may be provided, for example, using the graphical user interface by displaying a text field and prompting the user to enter the grid identifier or to display a list of available grid identifiers and prompting the user to select the appropriate identifier. The GUI also allows the user to initiate determination of the grid data in case the entered grid identifier did not yield a search result or is not shown in the displayed list. In case the routine determines that grid data is available, it proceeds to block 210 described later on. Otherwise, it proceeds to block 208.

In block 208, the grid data of the grid displayed in block 202 is determined with the routine implementing method 200 using the following steps:
a. determining the number of splitter instances, the relation of the splitter instances, the views associated with all splitter instances, the splitting ratio of each splitter instance and the thickness of the splitter line of each splitter instance based on the displayed grid;
b. determining the data objects assigned to the determined views based on the displayed grid; and
c. optionally determining the instance of view, grouping and highlighting associated with the determined data objects.

The determined grid data may be interrelated with a grid identifier and may be stored on a data storage medium, such as the internal memory of the computing apparatus implementing method 200 or a database.

In block 210, the routine implementing method 200 retrieves the grid data from a data storage medium, for example using the grid identifier described in relation with block 206. The data storage medium may be the internal data storage of the computing apparatus implementing method 200 or may be a database connected to said computing apparatus via a communication interface. The retrieved grid data includes at least a splitter instance identifier for each splitter instance of the grid and the splitting ratio of each splitter instance. In this example, the retrieved grid data further includes the data objects assigned to each view of each splitter instance, the view associated with each assigned data object and the grouping and highlighting of data objects. In another example, the retrieved grid data further includes the thickness of the splitter line associated with all splitter instances, the data objects assigned to each view of each splitter instance, the view associated with each assigned data object and the grouping and highlighting of data objects

In block 212, the routine implementing method 200 determines the view to be resized and the splitter instance associated with said view based on the user input detected in block 204 and grid data retrieved in block 210 or determined in block 208. For example, if the view to be resized is determined to be view 106a of FIG. 1, then the routine determines the splitter instance associated with said view based on the splitter instance identifier associated with said view, in this example it determines the splitter instance to be splitter instance110b.

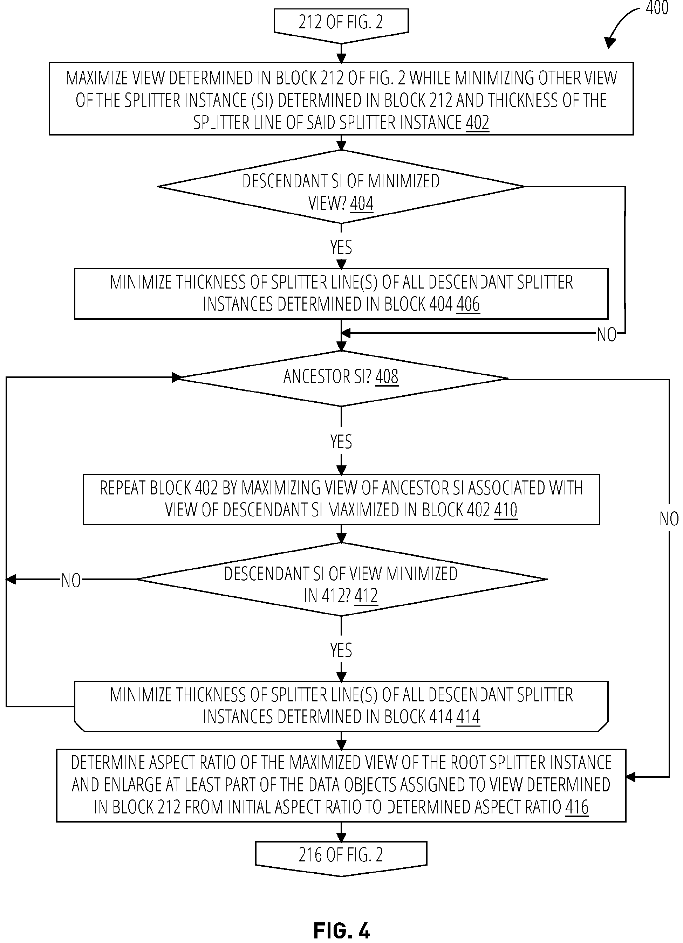

In block 214, the routine implementing method 200 resizes the view determined in block 212 and at least part of its assigned data objects based on the grid data retrieved in block 210 or determined in block 208 and the splitter instance determined in block 212. In this example, resizing the view determined in block 212 is performed according to method 400 described in relation to FIG. 4 later on.

In block 216, the routine implementing method 200 provides the resized view and at least part of its assigned data object(s) for display in the area of the GUI. At least part of the assigned data object(s) are then displayed in the resized view by the display of the computing apparatus implementing method 200. Routine 201 then ends method 200 or returns to block 202.

FIGs. 3A and 3B illustrate a flow diagram representing different embodiments for displaying the grid in block 202 of FIG. 2 in accordance with implementations of the invention. Method 300 may be implemented by using the computing apparatus described in relation to FIG. 6 or the system described in relation to FIG. 7 later on. In this example, displaying the grid in block 202 of FIG. 2 includes generating the grid by splitting the area of the grid at least once (i.e. performing blocks 304 to 320 and optionally blocks 318, 322, 324 of FIG. 3A). In another example, displaying the grid in block 202 of FIG. 2 includes retrieving grid data based on detected user input (i.e. performing blocks 302 and 304 of FIG. 3A). In yet another example, displaying the grid in block 202 of FIG. 2 includes generating the grid based on retrieved image data.

In block 304, the routine implementing method 300 determines how to generate the grid displayed in block 202 of FIG. 2. This determination may be made based on the user input detected by the routine, for example based on detecting a user input being indicative of generating a new grid by splitting the area of the GUI (denoted as "splitting area GUI" in FIG. 3A) or being indicative of retrieving an existing grid from a file (denoted as "file" in FIG. 3A) or being indicative of generating a grid from an image (denoted as "image" in FIG. 3A). In one example, the routine displays a menu containing said options within the GUI and detects selection of a menu item by the user via an interaction element, such as a mouse, touchscreen or keyboard. In another example, the routine detects a user input indicating retrieval of grid data or detects a user input indicating splitting the area of the GUI or detects a user input indicating retrieval of image data. In another example, this may be performed by displaying a menu and prompting the user to select the appropriate option. If the routine determines that the grid is to be displayed in block 202 of FIG. 2 using existing grid data, it proceeds to block 302. If routine determines that the grid is to be displayed in block 202 of FIG. 2 by splitting the area of the GUI, it proceeds to block 306. If routine determines that the grid is to be displayed in block 202 of FIG. 2 using image data of the grid, it proceeds to block 326 of FIG. 3B.

In block 302, the routine implementing method 300 retrieves grid data based on the detected user input. For this purpose, the routine detects a user input being indicative of selecting specific grid data, for example by selecting a file containing the digital representation of the grid in a browser, and retrieving the respective grid data from a data storage medium based on the detected user input. The grid data may be retrieved based on a provided grid ID, such as a number, name, etc.. The routine then uses the grid data to display the grid in the area of the GUI and proceeds to block 204 of FIG. 2.

In block 306, the routine implementing method 300 detects a user input being indicative of selecting an available area of the GUI. If block 306 is performed for the first time, the user can only select the available area, for example area 102 described in relation to FIG. 1. However, if block 306 is repeated, the user can select available views which are generated upon splitting the area in block 310 into two views, for example views 104a and 104b described in relation to in FIG. 1. In this example, selection of the area is detected by detecting the position of a cursor in the area or navigation of the curser into an area. In another example, selection of the area is detected by detecting a touchscreen gesture in the respective area. In yet another example, selection of the area is detected by detecting a short cut combination being indicative of a selection of a specific area.

In block 308, the routine implementing method 300 detects a binary input consisting of a selection of whether the area selected in block 304 is to be split horizontally or vertically and does not contain information on the exact position of the split. In this example, the detected binary user input is a detected left or right mouse click. In another example, the detected binary user input is a detected left or right touchscreen gesture. In yet another example, the detected binary user input is a detected short cut combination being indicative of a vertical or a horizontal division.

In block 310, the routine implementing method 300 determines whether the area selected in block 306 is to be split horizontally or vertically based on the user input detected in block 308 and splits the area vertically or horizontally into two views separated by a splitter line having a defined thickness. The views are split using a predefined splitting ratio. The result of the splitting operation is provided for display on the display of the computing apparatus implementing method 300 such that the user can see the result of the performed splitting operation. The splitting ratio between the first and the second view (denoted as a₁ and b₁) may be a ratio resulting in a commensurate split (i.e. a₁ = b₁) or any other ratio. The splitting is assigned to a splitter instance identifier indicating a root splitter instance or a nested splitter instance and the root splitter instance or nested splitter instance is associated with a defined splitting ratio between the first and the second view (denoted as a₁ and b₁) and with the splitter line having the defined thickness. The assigned splitter instance identifier, splitting ratio and splitter line thickness may be stored and may be used for undoing or redoing operations described later on. In one example, the splitter line is created by determining the split between the first and the second view and setting the total thickness of the splitter line half to a₁ and half to b₁ starting from the determined split. Determination of whether the area is to be split horizontally or vertically may be made according to the executable instructions. In this example, a horizontal split is determined upon detecting a left mouse click, a left swipe or defined short cut combination while a vertical split is determined upon detecting a right mouse click, a right swipe or another defined short cut combination. In another example, a horizontal split is determined upon detecting a right mouse click, a right swipe or defined short cut combination while a vertical split is determined upon detecting a left mouse click, a left swipe or another defined short cut combination.

In block 312, the routine implementing method 300 determines whether the user wants to modify the grid displayed in block 310. This determination may be made, for example, by detecting a user input being indicative of the modification of the grid, for example by detecting movement of the splitter line to modify the predefined splitting ratio. In one example, the modification includes a change of at least one splitting ratio associated with a splitting performed and displayed in block 310. In another example the modification includes an undo or redo operation of splitting(s) performed and displayed in block 310. In yet another example, the modification includes a change of at least one splitting ratio and an undo or redo operation of said change of splitting ratio and/or splitting(s) performed and displayed in block 310.

In this example, the user input being indicative of a redo/undo operation is the scroll of the mouse wheel of a computer mouse. For example, scrolling backwards on the mouse wheel is defined as undo operation while scrolling forwards on the mouse wheel is defined as redo operation. In another example, the detected input being indicative of a redo/undo operation a swipe gesture on the touchscreen, for example a swipe upwards is defined as undo operation while a swipe downward is defined as redo operation. In this example, the user input being indicative of a modification of the splitting ratio is selection and movement of the splitter line associated with the respective splitter instance and thus the splitting ratio. If the routine detects modification of the grid, it proceeds to block 314. Otherwise it proceeds to block 316 described later on.

In block 314, the routine implementing method 300 modifies the splitting operation performed in block 310 based on the detected user input, for example the modified position of the splitter line or an undo/redo operation, and provides the result of the modification for display. In case of modification of the splitting ratio, the routine determines the new position of the splitter line during and/or after the dragging operation, determines the new splitting ratio based on the determined position and provides the determined new splitting ratio (and thus also position of the splitter line) for display. In case of undoing a splitting operation, the routine deletes the last splitter instance and associated views which has been generated such that they are no longer displayed. The current splitter instance can be identified using the splitter instance identifier. Prior to deleting the splitter instance, the routine may copy the current splitter instance tree (i.e. list of splitter instance identifiers and history of generation) to the internal memory of the computing apparatus to allow restoring the deleted splitter instances. If more than one binary input being indicative of an undoing operation is detected, the number of binary inputs is determined, and this determination is used to determine the last splitter instance identifier associated with the determined number using the splitter instance identifiers. By comparing the determined last splitter instance identifier with the last splitter instance identifier associated with the currently displayed grid, the number of undoing operations can be determined and performed. More than one redoing operation can be performed likewise. In this example, the predefined binary input being indicative of an undoing operation consists of detecting a backwards scroll of a mouse wheel of a computer mouse while the predefined binary input being indicative of a redoing operation consists of detecting a forwards scroll on a mouse wheel of a computer mouse. In another example, the predefined binary input being indicative of an undoing operation consists of detecting an upwards swipe on the touchscreen while the predefined binary input being indicative of a redoing operation consists of detecting a downwards swipe on the touchscreen. With reference to FIG. 1, undoing the splitting operation resulting in splitter instance 110b with associated views 106a and 106b results in view 104a prior to performing the splitting of said view. Likewise, in case of redoing a splitting operation, the routine performs the splitting operation associated with the deleted splitter instance based on the associated splitting ratio using the stored splitter instance identifier(s). With reference to FIG. 1, redoing the splitting operation resulting in splitter instance 110b with associated views 106a and 106b can be performed by identifying the view to be split, i.e. view 104a, based on the spitter instance identifier of the deleted splitter instance 110b. The determination of the modification and the provision of the result for display may be performed in real-time to allow the user to see the modification of the grid on the display.

In block 316, the routine implementing method 300 determines whether the user wants to perform a further splitting operation. This determination may be made, for example, based on detected user inputs, for example based on detecting a binary input as described in relation to block 308. If the routine detects a further binary input, it proceeds to block 308 and repeats blocks 308 to 316. Otherwise, it proceeds to block 318. Blocks 308 to 316 can be repeated by the user until the desired grid has been generated. This allows generation of a flexible GUI using a recursive algorithm requiring minimal input, i.e. start, divide horizontal/vertical, finish, from the user during generation of the grid. Said algorithm allows the user to vertically and/or horizontally divide the GUI as desired, making it possible to divide an area of the GUI into an arbitrarily clustered amount of views to position arbitrary data objects (e.g. charts, tables, etc.) within these views. A splitting operation inserts two views, each view in turn offers the possibility to place two new views, and so on. As long as the user continues performing the splitting operation (left/right), i.e. continues performing blocks 308 to 316, further view(s) are created and displayed in the area of the GUI. The order of blocks 312 and 316 can be changed such that block 316 is performed prior to block 312.

In block 318, the routine implementing method 300 undoes or redoes splitting operations performed in block 310 or upon repeating block 310 based on a detected user input and provides the result for display. This block is generally optional and is only performed upon detecting a respective user input. In one example, redoing or undoing splitting operations as well as providing the result for display may be performed in real-time. In another example, redoing or undoing splitting operations may be performed after the last user input being indicative of a redoing or undoing operation is received. In this example, the detected user input is a binary input (i.e. back or forth) being indictive of undoing or redoing a performed splitting operation. The undoing or redoing of a performed splitting operation can be determined as previously described.

In block 320, the routine implementing method 300 detects a user input being indicative of finishing the grid generation. Such user input may be detected by detecting selection of a defined menu item via an interaction element. After this user input is detected, only the splitting ratio can be further modified, i.e. no further splitting operations or modifications of the generated views apart from changing the splitting ratio are possible. Once the input has been detected in block 320, all generated views can be used to place data object types. Each and every view has a bidirectional information mechanism which enables the developer to bundle all information about all views in one place and - on the other hand - send information to each of the views from any desired location.

In block 320, the routine implementing method 300 further detects a user input being indicative of assigning at least one data object type provided by the dashboard software product to at least one view of the grid obtained after block 310 or 314 or 318, assigns the selected data object type(s) to the respective view based on the detected user input and provides the assigned data object(s) for display. Suitable data object types include numbers, text, symbols, tables, diagrams, pictures, measured data obtained by a colorimetry software, such as color data, appearance data, topographic surface data, in particular surface roughness, coating thickness data, or a combination thereof. Once a data object type has been assigned to a view, the view contains an instance of the respective assigned data object type (called assigned data object within the present disclosure). This allows assigning data object types of the same type, but with different contents, or data object types with the same content, to either the same or different views. Moreover, assigned data objects can be the same data objects or different data objects. Additionally, a view can comprise more than one assigned data object. In this case, the assigned data objects are displayed in the form of tabs such that the user can select the desired data object from the plurality of data objects assigned to the view. Also, the same data object type can be assigned to more than one view. The user input may be detected by detecting selection of a button displayed within each generated view via an interaction element.

In block 322, the routine implementing method 300 detects a user input being indicative of modifying at least one view, modifies the view(s) based on the detected user input and provides the result of the modification for display. This block is generally optional an only performed if a respective user input is detected by the routine. A user input being indicative of modifying at least one view may include movement of an assigned data object from one view to another, or movement of a tab being indicative of an assigned data object to another position in the row of tabs displayed in said view (i.e. altering the order of data objects assigned to a view), or grouping and highlighting data objects assigned to a single or multiple views. The aforementioned user input may be detected via an interaction element, for example by detecting a drag-and-drop operation associated with an assigned data object via said interaction element. A further user input being indicative of modifying at least one view may include selection of at least two assigned data objects within a view or in different views following by a user input being indicative of grouping said selected data objects. Modifying of the view(s) based on the aforementioned user input may include highlighting the selected data objects with a common color and/or numbering. Highlighting of the data objects may be performed by assigning the same number to the grouped data objects or by assigning the same color to the grouped data objects and providing the same numbering or coloring to the display device for display in the GUI. Grouping of data objects allows displaying different data objects related to the same topic in different views. This provides a better overview of all data available for a specific topic to the user and thus increases user comfort.

In block 324, the routine implementing method 300 generates grid data of the grid displayed after performing block 320 or 322 and provides the generated grid data to a data storage medium, this block being generally optional. In this example, the grid data contains the splitter instance identifier of each splitter instance of the grid, the splitting ratios of each splitter instance, the assigned data object(s), the view associated with each assigned data object and optionally the grouping and highlighting of assigned data object(s). In another example, the grid data includes more or less data. Generating grid data may include interrelating the splitter instance identifier and splitting ratio with a grid ID and pooling the data generated during generation of the grid using said grid ID. The pooled data may be modified, for example by removing redundant inputs to reduce the grid data to an optimized minimum. The grid ID may be a text string, a numerical string or a combination thereof. The grid data may be interrelated with a grid ID prior to providing said data to the data storage medium, such as a database or the internal memory of the computing apparatus performing method 300. This allows reducing the amount of data which needs to be stored for transferring or reloading the finished grid. Storing said data as data associated with the grid allows to easily retrieve said data and to display the grid based on the retrieved data without having to generate the grid once again. After the end of block 324, method 300 returns to block 204 of FIG. 2.

In block 326, the routine implementing method 300 retrieves image data of the grid via a communication interface from a data storage medium. In this example, the image data of the grid is retrieved based on a detected user input, for example a user input indicating selecting available image data or a user input indicating an ID associated with the image data. The image data may be obtained by drawing the image of the grid using a computer program or by scanning a grid drawn on paper or by scanning a photo of the grid.

In block 328, the routine implementing method 300 checks the retrieved image data, this block being generally optional. Checking the retrieved image data may include determining whether the predefined parameters, such as a predefined minimal resolution, contrast, etc., are fulfilled by the retrieved image data. If the check reveals that the retrieved image data is not suitable to perform block 330, the routine may prompt the user to provide new image data or may issue a warning message to the user stating that the grid data may not be detected in block 330 correctly or only partially. This block ensures that the quality of the image data is sufficiently high to generate the grid from said data in block 330.

In block 330, the routine implementing method 300 determines the number of splitter instances, the relation of the splitter instances, the splitting ratio of each splitter instance and the thickness of the splitter line of each splitter instance using the image data retrieved in block 326 or checked in block 328. In this block, the routine may interrelate each determined splitter instance with a unique splitter instance identifier which is indicative of the relation of said splitter instance to other splitter instances (see for example splitter instance tree shown in FIG. 1). The determination may be made using commonly known image recognition techniques, for example by detecting pixel having a darker or lighter color and forming a rectangular around said detected pixels, machine learning techniques, deep learning techniques and/or artificial intelligence methods.

In block 332, the routine implementing method 300 displays the grid generated from the data determined in block 330. This allows the user check whether the routine has correctly determined the grid data from the retrieved image data. In this example, the generated grid is displayed in a predefined area of the GUI, such that further content, for example a header and/or footer mentioned previously can also be displayed within the GUI.

In block 334, the routine implementing method 300 determines whether the user wants to modify the grid displayed in block 332. For this purpose, the routine may display a menu prompting the user to indicate whether he wants to modify the displayed grid or the routine may determine that the user wishes to modify the displayed grid based on a detected user input being indicative of modifying the displayed grid. If the routine determines in block 334 that the user wants to modify the displayed grid, it proceeds to block 312 of FIG. 3A. If the routine determines that the user wants to perform further splitting operations within the displayed grid, it proceeds to block 308 of FIG. 3A. If the routine determines that the user does not want to modify the displayed grid, it proceeds to block 320 of FIG. 3A.

FIG. 4 illustrates a flow diagram representing an embodiment of resizing the view and at least part of its assigned data objects as described in block 214 of FIG. 2 in accordance with implementations of the invention. Method 400 may be implemented by using the computing apparatus described in relation to FIG. 6 or the system described in relation to FIG. 7 later on.

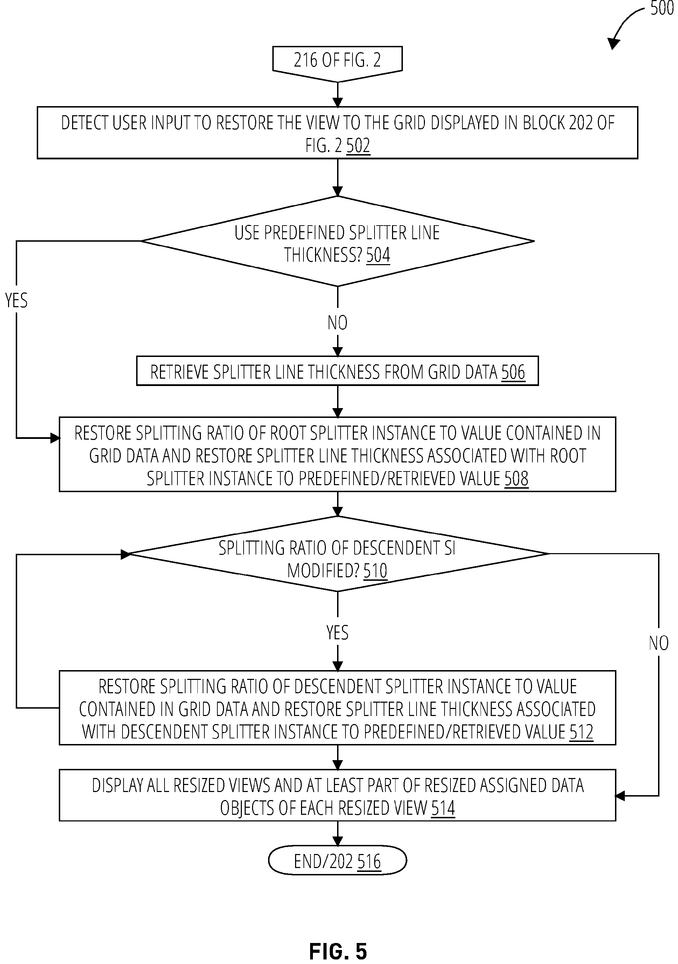

In block 402, the routine implementing method 400 maximizes the view determined in block 212 of FIG. 2 while minimizing the other view of the splitter instance (also called SI) determined in block 212 of FIG. 2 and the thickness of the splitter line of said splitter instance. The view determined in block 212 is maximized by modifying the splitting ratio ax:bx (with ax > 0 and bx > 0 and x representing a splitter instance identifier assigned to the splitter instance associated with the splitting ratio) of said splitter instance to ax_max = ax+bx and bx_max = 0 or bx_max = ax+bx and ax_max = 0 depending on the view determined in block 212. For example, if view 106a of splitter instance 110b of FIG. 1 is determined in block 212 of FIG. 1, maximizing view 106a results in modifying the splitting ratio a_{2.1}:b_{2.1} to a_{2.1,max} = a_{2.1}+b_{2.1} and b_{2.1,max} = 0. Setting b_{2.1,max} to zero results in views 108a and 108b being no longer displayed, because they do not have any space for being displayed any longer. Thus, minimizing view 106b results in splitter instance 110d and associated views 108a and 108b no longer being displayed without modifying the splitting ratio of splitter instance 110d, i.e. the splitting ratio of a_{3.1}(108a):b_{3.1}(108b). Not modifying the splitter ratio of each descendent splitter instance allows to restore the grid efficiently without having to restore each splitting ratio, for example as described in relation to FIG. 5 later on. The splitter line thickness of the splitter instance determined in block 212 is minimized by setting the thickness of said splitter line to zero such that is no longer displayed. Referring to the previous example, the thickness of the splitter line associated with splitter instance 110b is set to zero. Performing block 402 results in reversing the splitting operation associated with the splitter instance determined in block 212 (in this example splitter instance 110b) and all descendent splitter instances of said splitter instance (in this example splitter instance 110d).

Block 402 can also be performed after block 406 because the grid resulting after performing blocks 402 to 406 is not displayed to the user.

In block 404, the routine implementing method 400 determines whether any descendant splitter instances of the view minimized in block 402 are existing. Descendant splitter instance(s) of the view minimized in block 402 are all nested splitter instances originating from said view, i.e. all views generated by splitting said view. This determination may be made, for example, by determining whether splitter instance identifiers associated with descendent splitter instances of the minimized view are existing in the retrieved grid data. For example, if view 106a of FIG. 1 was maximized in block 402, the view of splitter instance 110b minimized in block 402 is view 106b. A descendent splitter instance of view 106b is existing, namely splitter instance 110d with associated views 108a and 108b. Thus, in this example, the routine determines that one descendent or nested splitter instance is existing and proceeds to block 406. Otherwise the routine proceeds to block 408 described later on.

In block 406, the routine implementing method 400 minimizes the thickness of all splitter line(s) of all descendent splitter instances determined in block 404. In this example, the thickness of the splitter line(s) is minimized by setting the thickness to zero such that the splitter line(s) are no longer be displayed within the grid. Referring to the example mentioned in block 402 with respect to FIG. 1, the splitter line thickness of descendent splitter instance 110d of minimized view 106b is set to zero.

In block 408, the routine implementing method 400 determines whether ancestor splitter instances of the splitter instance determined in block 212 of FIG. 2 are existing. This determination may be made, for example, by determining whether the splitter instance determined in block 212 is the root splitter instance based on the splitter instance identifier of said splitter instance. If this is not the case, i.e. if the splitter instance determined in block 212 is not the root splitter instance, the routine proceeds to block 410, otherwise the routine proceeds to block 416.

In block 410, the routine implementing method 400 repeats block 402 by maximizing the view of the ancestor splitter instance determined in block 408 which is associated with the view maximized in block 402. The view of the ancestor splitter instance associated with the view maximized in block 402 is the view of the ancestor splitter instance used to generate the descendant splitter instance view which has been maximized in block 402. Maximizing the view is preferably performed by modifying the splitting ratio of said splitter instance as described in relation to block 402. Minimizing the splitter line thickness is preferably performed by setting the thickness of the splitter line to zero as described in relation to block 402. Referring to the example mentioned in block 402 with respect to FIG. 1, the ancestor splitter instance of the splitter instance determined in block 212 is splitter instance 110a. The view of the ancestor splitter instance 110a associated with the view maximized in block 402 is view 104a, because view 104a has been used to generate splitter instance 110b with views 106a and 106b. Maximizing view 104a is performed by modifying the splitting ratio a₁:b₁ to a_{1,max} = a₁+b₁ and b_{1,max} = 0 such that view 104a occupies the whole area occupied by views 104a and 104b and view 104b is no longer being displayed because b_{1,max} is set to zero. Setting b_{1,max} to zero results in descendant splitter instances 110e and 110f no longer being displayed without modifying the splitting ratio a_{2.2}:b_{2:2} of splitter instance 110c, a_{3.2.1}:b_{3.2.1} of splitter instance 110e and a_{3.2.2}:b_{3.2.2} of splitter instance 110f because they do not have any space left for being displayed since the whole area of the GUI is no occupied by view 104a. Since the splitting ratio of all descendant splitter instance(s) of the view of the root splitter instance minimized in block 410 is not modified, restoration of the splitting ratio of the root splitter instance automatically results in display of the views of all descendant splitter instance(s) in the respective splitting ratios and thus allows to restore the grid rather efficiently, as described in relation to FIG. 5 below. The thickness of the splitter line of splitter instance 110a is set to zero such that the splitter line is no longer being displayed. Performing block 410 results in reversing the splitting operation associated with the ancestor splitter instance of the splitter instance determined in block 212 (in this example splitter instance 110a) and all descendent splitter instances of said ancestor splitter instance (in this example splitter instances 110e and 110f).

Block 410 can also be performed after block 414 but prior to block 416 because the grid resulting after performing blocks 410 to 414 is not displayed to the user.

In block 412, the routine implementing method 400 determines whether any descendant splitter instances of the view of the ancestor splitter instance minimized in block 412 are existing as described in relation to block 404 previously. If the routine determines that no descendant splitter instances are existing, it returns to block 408, otherwise it proceeds to block 414.

In block 414, the routine implementing method 400 minimizes the thickness of the splitter line(s) of all descendent splitter instances determined in block 412 as described in relation to block 404 previously. After the end of block 414, the routine returns to block 408 and determines whether any ancestor splitter instance of the splitter instance determined upon previously performing block 408 is existing. If this the case, the routine performs blocks 410 and 412 or blocks 410 to 414 for said determined ancestor splitter instance. If no ancestor splitter instance is existing (as is the case with reference to FIG. 1 because the splitter instance determined upon previously performing block 408 was determined to be the root splitter instance, i.e. the splitter instance not having any further ancestor splitter instances), it proceeds to block 416. The routine loops through blocks 408 to 412 or blocks 408 to 414 until the root splitter instance is reached before it proceeds to block 416.

In block 416, the routine implementing method 400 determines the aspect ratio (i.e. the height and width) of the maximized view of the root splitter instance, i.e. the view of the root splitter instance maximized upon performing block 410 for the root splitter instance, and enlarges at least part of the data objects assigned to the view determined in block 212 from their initial aspect ratio to the determined aspect ratio. In one example, the routine determines the aspect ratio of the area of the GUI and the initial aspect ratio of at least part of the data objects assigned to the view determined in block 212 and enlarges the determined initial aspect ratio of at least part of the assigned data object to the determined aspect ratio of the area of the GUI. Afterwards, method 400 proceeds to block 216 of FIG. 2

FIG. 5 illustrates a flow diagram of a second non-limiting embodiment of the inventive method for resizing a view and at least part of the assigned data objects of a grid displayed in a graphical user interface (GUI) of a dashboard software product. The GUI is displayed on the screen of an electronic device, such as a mobile electronic device or a stationary electronic device. Method 500 may be implemented using the computing apparatus described in relation to FIG. 6 or the system described in relation to FIG. 7 later on. In this example, the GUI further comprises, apart from the area with the grid, a quick start button bar, a standard header and a standard footer. The quick start button bar is pinned at an arbitrary position at the edge of the area. Method 500 may be used to restore the original view of the grid, i.e. the view of the grid prior to a resizing operation. In this example, performing blocks 202 to 216 of method 200 of FIG. 2 results in maximizing a view and at least part of its assigned data objects while blocks 502 to 514 of method 500 result in restoring the view of the grid to the minimized view, i.e. the view displayed in block 202 of FIG. 2. In another example, blocks 202 to 216 of method 200 of FIG. 2 results in minimizing a view and at least part of its assigned data objects while blocks 502 to 514 of method 500 result in restoring the view of the grid to the maximized view, i.e. the view displayed in block 202 of FIG. 2.

Method 500 contains blocks 202 to 216 described in relation to FIG. 2 and further contains blocks 502 to 514 described hereinafter.

In block 502, the routine implementing method 500 detects a user input being indicative of restoring the grid to the view of the grid displayed in block 202 of FIG. 1. In this example, the routine detects a user input being indicative of restoring the view of the grid to the minimized view, i.e. undoing the maximizing operation performed in block 214 of FIG. 2. In this example, the user input is detected via an interaction element, such as an input device or input/output device. Detecting the user input may comprise detecting selecting of a resize icon in resized view displayed in block 216 of FIG. 2.

In block 504, the routine implementing method 500 determines whether a predefined splitter line thickness is to be used. This determination may be made for example, based on the received user input (i.e. by displaying a menu prompting the user to select the respective option) or based on the programming of the routine. In this example, a predefined splitter line thickness is used and the routine proceeds to block 508. In case a different thickness than the predefined thickness is to be used, the routine proceeds to block 506.

In block 506, the routine implementing method 500 retrieves the splitter line thickness from the determined/retrieved grid data.

In block 508, the routine implementing method 500 restores the splitting ratio of the root splitter instance to the splitting ratio contained in the retrieved/determined grid data and restores the splitter line thickness to the predefined thickness or the retrieved thickness. For this purpose, the routine may retrieve the splitting ratio interrelated with the splitter instance identifier and optionally the thickness of the splitter line associated with each splitter instance from the determined or retrieved grid data (see block 208 or 210 of FIG. 2). Retrieving said data may include interrelating the splitting ratio and retrieved/predefined splitter line thickness with the respective splitter instance identifier and generating a tree representation based on the retrieved data (such as shown in FIG. 1). The routine may identify the root splitter instance based on the splitter instance identifier contained in said data. Referring to FIG. 1, if the splitting ratio a₁:b₁ of the root splitter instance 110a is restored from a_{1,max} = a₁ + b₁ and b_{1,max} = 0 to a₁ = 0.5 and b₁ = 0.5, views 104a and 104b are displayed again. Restoration of the splitting ratio of the root splitter instance results in display of all descendant splitter instances of the view of the root splitter instance minimized in block 410 of FIG. 4 because the splitting ratio of said descendant splitter instances was not modified in block 410 and b₁ is no longer set to zero but restored to its original value. Referring to the example described in relation to FIG. 402, splitter instances 110e and 110f as well as associated views 108a, 108b, 108c and 108d are restored (i.e. will be displayed as described later on).

In block 510, the routine implementing method 500 determines whether the splitting ratio of a descendant splitter instance of the root splitter instance was modified in block 214 of FIG. 2. For this purpose, the routine may compare the splitting ratio contained in the grid data or in the data retrieved in block 508 with the current splitting ratio of said descendant splitter instance(s) using the splitter instance identifier of said descendant splitter instance(s). If the routine determines that the splitting ratio of a descendent splitter instance is modified, it proceeds to block 512, otherwise it proceeds to block 514 described later on. The latter may be the case if one of the views of the root splitter instance is maximized because the splitting instance of all descendent splitter instances of the minimized view of the root splitter instance was not modified in block 402 of FIG. 4. Thus restoration of the splitting ratio of the root splitter instance results in automatic display of all descendant splitter instances of the minimized view of the root splitter instance.

In block 514, the routine implementing method 500 restores the splitting ratio of the descendent splitter instance determined in block 512 to the splitting ratio contained in the retrieved/determined grid data and restores the splitter line thickness to the predefined thickness or the retrieved thickness. Referring to the example described in relation to FIG. 402, where the splitting ratio of splitter instance 110b was modified by maximizing view 106a and minimizing view 106b, restoration of the current splitting ratio a_{1.1,max} = a_{1.1}+b_{1.1} and b_{1.1,max} = 0 to a_{1.1}:_{b1:1} = 0.5:0.5 results in display of views 106a and 106b. Moreover, it also results in display of all views of all descendent splitter instances of view 106b minimized in block 402 of FIG. 4 i.e. splitter instance 110d and views 108a and 108b, because b_{1.1} is no longer set to 0. After the end of block 512, the routine returns to block 510 and determines whether the splitting ratio of descendent splitter instances of the splitter instance determined upon previously performing block 510 was modified. The routine loops through blocks 510 and 514 until the splitter instance for which the user input was detected in block 212 is reached. In this example, no splitting ratio of descendant splitter instances of splitter instance 110b was modified, thus the routine proceeds to block 514.

In block 514, the routine implementing method 500 resizes at least part of the data objects assigned to the view determined in block 212 of FIG. 2 to the initial aspect ratio of the view. This may be done, for example, by determining the initial aspect ratio of the view determined in block 212 or by determining the initial aspect ratio of the data objects assigned to said view (for example by retrieving said value from the determined/retrieved grid data). The size (i.e. aspect ratio) of data objects assigned to views for which the user input was not detected in block 204 of FIG. 2 may be contained in the retrieved/determined grid data and may be used in this block. The result of block 514 is the view of the grid as displayed in block 202 of FIG. 2. After the end of block 514, the routine ends method 500 or returns to block 202 of FIG. 2.

FIG. 6 shows a computing device 600 that can be used to implement any method set forth in the above-described figures. For instance, the type of computing device 600 shown in FIG. 6 can be used to implement the methods described in relation to FIGs. 2 to 5. In all cases, the computing device 600 represents a physical and tangible processing mechanism.

The computing device 600 can include one or more hardware processors 602. The hardware processor(s) can include, without limitation, one or more Central Processing Units (CPUs), and/or one or more Graphics Processing Units (GPUs), and/or one or more Application Specific Integrated Circuits (ASICs), etc. More generally, any hardware processor can correspond to a general-purpose processing unit or an application-specific processor unit.

The computing device 600 can also include computer-readable storage media 604, corresponding to one or more computer-readable media hardware units. The computer-readable storage media 604 retains any kind of information 606, such as computer- or machine-readable instructions, settings, data, etc. Computer-executable instructions comprise, for example, instructions and data which, when executed at a processor 602, cause the computing device 600 to perform a certain function or group of functions. Alternatively or in addition, the computer-executable instructions may configure the computing device 600 to perform a certain function or group of functions. The computer executable instructions may be, for example, binaries or even instructions that undergo some translation (such as compilation) before direct execution by the processors, such as intermediate format instructions such as assembly language, or even source code. Without limitation, for instance, the computer-readable storage media 604 may include one or more solid-state devices, one or more magnetic hard disks, one or more optical disks, magnetic tape, and so on. Any instance of the computer-readable storage media 604 can use any technology for storing and retrieving information. Further, any instance of the computer-readable storage media 604 may represent a fixed or removable component of the computing device 600. Further, any instance of the computer-readable storage media 604 may provide volatile or non-volatile retention of information.

The computing device 600 can utilize any instance of the computer-readable storage media 604 in different ways. For example, any instance of the computer-readable storage media 604 may represent a hardware memory unit (such as Random Access Memory (RAM)) for storing transient information during execution of a program by the computing device 600, and/or a hardware storage unit (such as a hard disk) for retaining/archiving information on a more permanent basis. In the latter case, the computing device 600 also includes one or more drive mechanisms 608 (such as a hard drive mechanism) for storing and retrieving information from an instance of the computer-readable storage media 604.

The computing device 600 may perform any of the functions described above when the hardware processor(s) 602 carry out computer-readable instructions stored in any instance of the computer-readable storage media 604. For instance, the computing device 600 may carry out computer-readable instructions to perform each block of the methods described in FIGs. 2 to 5.

Alternatively, or in addition, the computing device 600 may rely on one or more other hardware logic components 610 to perform operations using a task-specific collection of logic gates. For instance, the hardware logic component(s) 610 may include a fixed configuration of hardware logic gates, e.g., that are created and set at the time of manufacture, and thereafter unalterable. Alternatively, or in addition, the other hardware logic component(s) 610 may include a collection of programmable hardware logic gates that can be set to perform different application-specific tasks. The latter category of devices includes, but is not limited to Programmable Array Logic Devices (PALs), Generic Array Logic Devices (GALs), Complex Programmable Logic Devices (CPLDs), Field-Programmable Gate Arrays (FPGAs), etc.

FIG. 6 generally indicates that hardware logic circuitry 612 includes any combination of the hardware processor(s) 602, the computer-readable storage media 604, and/or the other hardware logic component(s) 610. That is, the computing device 600 can employ any combination of the hardware processor(s) 602 that execute machine-readable instructions provided in the computer-readable storage media 604, and/or one or more other hardware logic component(s) 610 that perform operations using a fixed and/or programmable collection of hardware logic gates. More generally stated, the hardware logic circuitry 612 corresponds to one or more hardware logic components of any type(s) that perform operations based on logic stored in and/or otherwise embodied in the hardware logic component(s).

The computing device 600 also includes an input/output interface 614 for receiving various inputs (via input devices 616), and for providing various outputs (via output devices 618). Illustrative input devices include a keyboard device, a mouse input device, a touchscreen input device, a digitizing pad, one or more static image cameras, one or more video cameras, one or more depth camera systems, one or more microphones, a voice recognition mechanism, any movement detection mechanisms (e.g., accelerometers, gyroscopes, etc.), and so on. One particular output mechanism may include a display device 618 and an associated graphical user interface presentation (GUI) 620. The display device 618 may correspond to a liquid crystal display device, a light-emitting diode display (LED) device, a cathode ray tube device, a projection mechanism, etc. Other output devices include a printer, one or more speakers, a haptic output mechanism, an archival mechanism (for storing output information), and so on.

The computing device 600 can also include one or more network interfaces 622 for exchanging data with other devices, such as the web server of FIG. 7, via one or more communication conduits 624. One or more communication buses 628 communicatively couple the above-described components together.

The communication conduit(s) 624 can be implemented in any manner, e.g., by a local area computer network, a wide area computer network (e.g., the Internet), point-to-point connections, etc., or any combination thereof. The communication conduit(s) 624 can include any combination of hardwired links, wireless links, routers, gateway functionality, name servers, etc., governed by any protocol or combination of protocols.

FIG. 6 shows the computing device 600 as being composed of a discrete collection of separate units. In some cases, the collection of units may correspond to discrete hardware units provided in a computing device chassis having any form factor.

FIG. 7 illustrates a client-server environment 700 for a dashboard software product allowing to resize a view and at least part of the assigned data objects of a grid displayed in a graphical user interface (GUI) of the dashboard software product in accordance with various embodiments.

As will be appreciated, although a web-based environment is used for purposes of explanation, different environments may be used, as appropriate, to implement various embodiments. The environment 700 includes an electronic client device 702, which can include any appropriate device operable to send and/or receive requests, messages, or information over an appropriate network 704 and convey information back to a user of the device. Examples of such client devices include personal computers, cell phones, handheld messaging devices, laptop computers, tablet computers, embedded computer systems and the like. The network can include any appropriate network, including an intranet, the Internet, a cellular network, a local area network, a satellite network, or any other such network and/or combination thereof. Components used for such a system can depend at least in part upon the type of network and/or environment selected. Many protocols and components for communicating via such a network are well known and will not be discussed herein in detail. Communication over the network can be enabled by wired or wireless connections and combinations thereof. In this example, the network includes the Internet and/or other publicly-addressable communications network, as the environment includes a web server 706 for receiving requests and serving content in response thereto, although for other networks an alternative device serving a similar purpose could be used as would be apparent to one of ordinary skill in the art.

The illustrative environment includes at least one application server 708 and a data store 712. It should be understood that there can be several application servers, layers, or other elements, processes, or components, which may be chained or otherwise configured, which can interact to perform tasks such as obtaining data from an appropriate data store. Servers, as used herein, may be implemented in various ways, such as hardware devices or virtual computer systems. In some contexts, servers may refer to a programming module being executed on a computer system. As used herein, unless otherwise stated or clear from context, the term "data store" refers to any device or combination of devices capable of storing, accessing, and retrieving data, which may include any combination and number of data servers, databases, data storage devices, and data storage media, in any standard, distributed, virtual, or clustered environment. The application server can include any appropriate hardware, software, and firmware for integrating with the data store as needed to execute aspects of one or more applications for the client device, handling some or all of the data access and business logic for an application. The application server may provide access control services in cooperation with the data store and is able to generate content including, but not limited to, text, graphics, audio, video, and/or other content usable to be provided to the user, which may be served to the user by the web server in the form of HyperText Markup Language ("HTML"), Extensible Markup Language ("XML"), JavaScript, Cascading Style Sheets ("CSS"), JavaScript Object Notation (JSON), and/or another appropriate client-side structured language. Content transferred to a client device may be processed by the client device to provide the content in one or more forms including, but not limited to, forms that are perceptible to the user audibly, visually, and/or through other senses. The handling of all requests and responses, as well as the delivery of content between the client device 902 and the application server 908, can be handled by the web server using PHP: Hypertext Preprocessor ("PHP"), Python, Ruby, Perl, Java, HTML, XML, JSON, and/or another appropriate server-side structured language in this example. Further, operations described herein as being performed by a single device may, unless otherwise clear from context, be performed collectively by multiple devices, which may form a distributed and/or virtual system.

The data store 712 can include several separate databases, data documents, dynamic data storage schemes, and/or other data storage mechanisms and media for storing data relating to a particular aspect of the present disclosure. For example, the data store 712 illustrated may include mechanisms for storing grid data 710 and measurement data, such as color measurement data, 714, which can be used to serve content for the production side. It should be understood that there can be many other aspects that may need to be stored in the data store, such as page image information and access rights information, which can be stored in any of the above listed mechanisms as appropriate or in additional mechanisms in the data store 712. The data store 712 is operable, through logic associated therewith, to receive instructions from the application server 708 and obtain, update, or otherwise process data in response thereto. The application server 708 may provide static, dynamic, or a combination of static and dynamic data in response to the received instructions.

Dynamic data, such as data used in web logs (blogs), shopping applications, news services, and other such applications may be generated by server-side structured languages, as described herein, or may be provided by a content management system ("CMS") operating on, or under the control of, the application server. In one example, a user, through a device operated by the user, might submit a search request for a certain type of item. In this case, the data store might access the user information to verify the identity of the user and can access the catalog detail information to obtain information about items of that type. The information then can be returned to the user, such as in a results listing on a web page that the user is able to view via a browser on the user device 702. Information for a particular item of interest can be viewed in a dedicated page or window of the browser. It should be noted, however, that embodiments of the present disclosure are not necessarily limited to the context of web pages, but may be more generally applicable to processing requests in general, where the requests are not necessarily requests for content.

Each server typically will include an operating system that provides executable program instructions for the general administration and operation of that server and typically will include a computer-readable storage medium (e.g., a hard disk, random access memory, read only memory, etc. storing instructions that, when executed (i.e., as a result of being executed) by a processor of the server, allow the server to perform its intended functions.

The environment 700, in one embodiment, is a distributed and/or virtual computing environment utilizing several computer systems and components that are interconnected via communication links, using one or more computer networks or direct connections. However, it will be appreciated by those of ordinary skill in the art that such a system could operate equally well in a system having fewer or a greater number of components than are illustrated in FIG. 7.

Figure 8 is an example screenshot of a GUI 800 containing 4 views 802a, 804a, 806a and 808a, each view containing one or more assigned data objects. In this example, the GUI has been generated using blocks 304 to 316 and 318 of method 300 described in relation to FIG. 3A. In this example, the area has been split horizontally and each generated view has then been split vertically such that the resulting grid contains a total of 4 views802a, 804a, 806a and 808a. Each splitting was done using a defined splitting ratio of aₓ:bₓ = 0.5:0.5 such each view is split commensurate resulting in all views 802a, 804a, 806a and 808a having the same size. However, the spitting can also be done according to any predefined splitting ratio ax:bx with ax>0 and bx >0. Moreover, the defined splitting ratio can be adjusted by the user by dragging the corresponding splitter line (not shown) to the desired position within the respective view. In another example, the grid contains more or less views than previously mentioned.

In this example, two assigned data objects 802b, 802c, 804b, 804c, 808b and 808c are displayed in each of views 802a, 804a and 808a, while only one assigned data object 806b is displayed in view 806a. If more than one data object is assigned to a view, the assigned data objects are displayed in the form of tabs and the tab associated with the selected data object is underlined with a black solid line. The user can switch between the assigned data objects of a view by clicking on the respective tab associated with the data object. Each data object is displayed using a tab displaying a name being indicative of the content of the data object to increase user comfort, especially if more than one data object is assigned to a view, since in this case, only one data object assigned to the view is displayed. In another example (not shown), exactly one assigned data object is displayed in each of views 802a, 804a, 806a and 808a. However it is likewise possible to assign more than two data object types to one view or to not assign any data object type to a view. A "+"-button 802d is provided in each of views 802a, 804a, 806a and 808afor selecting data object types to be assigned and displayed in each of views 802a, 804a, 806a and 808a. Moreover, a resize button 802e, 804d, 806c and 808d is provided in each view to resize, i.e. to maximize, the view and at least part of its assigned and displayed data objects. The GUI 800 may further comprise a quick start button bar comprising multiple buttons for activating different functions which may be positioned at the upper edge, the lower edge, the left side or the right side of the GUI (not shown).

In this example of GUI 800, data objects 802b, 802c, 804b, 804c, 806b , 808b, and 808c assigned to views 802a, 804a, 806a and 808aare grouped into two subgroups. Different colors (indicated by different brightness) and numbers are used to highlight the different subgroups in the GUI 800. The tab of each data object displays a number 820 and is colored corresponding to the subgroup the assigned data object belongs to. It may likewise be possible to group the assigned data objects into more than two subgroups or to group only part of the assigned and displayed data objects into subgroups.

Figure 9 is an example screenshot of a GUI 900 comprising a resized, i.e. maximized, data object which was generated using blocks 204 to 216 of method 200 described in relation to FIG. 2 and blocks 402 to 416 of method 400 described in relation to FIG. 4. GUI 900 is obtained by maximizing view 808a assigned data object 808c of GUI 800 of FIG. 8.

In this example, the user has pressed resize button 808d of GUI 800 of FIG. 8 to maximize view 808a and at least part of its assigned and displayed data objects 808b and 808c. Referring to FIG. 1, view 808a of FIG. 8 corresponds to area 106d and associated splitter instance 110c of FIG. 1. Thus, in the first step of the maximizing process, the splitting ratio a_{2.2}(view 106c):b_{2.2} (view 106d) is adjusted such that a_{2.2,max} = 0 and b_{2.2,max}=a_{2.2}+b_{2.2}, i.e. view 106d is maximized while view 106c is minimized, i.e. view 106c and its assigned data objects are no longer displayed. In this example, no descendant splitter instances of view 106d to be maximized are existing, thus the next step of the maximizing process is to maximize the respective view of the ancestor splitter instance of splitter instance 110c, in this case root splitter instance 110a. Maximized view 106d is originating from view 104b of root splitter instance 110a, thus view 104b of root splitter instance 110a is maximized by modifying the splitting ratio a₁:b₁ = 0.5:0.5 to a_{1,max} = 0 and b_{1,max} = a₁+b₁ (i.e. maximizing view 104b while minimizing view 104a). Minimizing view 104aresults in that all views and all assigned data objects of all descendant splitter instances of said view 104a, i.e. views 02a and 04a, are also no longer be displayed because they are no longer allocated any space within the grid. This results in maximized view 808a containing maximized data object 808c. The maximized data object is obtained by maximizing the initial aspect ratio of the data object 808c of view 808a to the aspect ratio of the maximized view 808a.

Further functions of the maximized view, i.e. assignment of new data object types via the "add" button 802e, are maintained. Moreover, the grouping and highlighting 810 of the maximized data objects is also maintained. The maximization of view 808a can be undone by clicking on the resize button 902 in the upper right corner of this view. This triggers the method described in blocks 502 to 514 of FIG. 5 and restores the grid to the view shown in FIG. 8.

## Claims

1. A computer-implemented method for resizing a view and at least part of its assigned data objects of the grid displayed in a graphical user interface (GUI) of a dashboard software product, said method comprising:
under the control of one or more computer system configured with executable instructions, at least one computer system comprising a display,
(i) displaying on the display the GUI comprising a grid containing at least two views and at least one data object assigned to at least one of the views, wherein the grid has been generated by splitting an area of the GUI horizontally or vertically in at least two views and assigning at least one data object type to the generated views, each splitting being assigned to a splitter instance having a defined splitting ratio between the first and the second view associated with said splitter instance;
(ii) detecting a user input to resize one of the views displayed in step (i);
(iii) retrieving via a communication interface data associated with the grid from a data storage medium or determining data associated with the grid based on the grid displayed in step (i), wherein the data associated with the grid contains the splitting ratio of each splitter instance of the grid, the splitter instance identifier of each splitter instance of the grid and optionally the splitter line thickness associated with each splitter instance of the grid;
(iv) determining the view to be resized and the splitter instance associated with said view based on the detected user input and the retrieved or determined data associated with the grid;
(v) resizing the view determined in step (ii) and at least part of its assigned data objects based on the retrieved or determined data associated with the grid and the determined splitter instance; and
(vi) displaying the resized view and all assigned data objects in the area of the GUI displayed on the display of the electronic device.

2. The method according to claim 1, wherein resizing the view and at least part of the assigned data objects comprises increasing the aspect ratio of the view and at least part of the assigned data objects compared to the initial aspect ratio of the view and at least part of the assigned data objects and/or decreasing the current aspect ratio of the view and at least part of the assigned data objects to the initial aspect ratio of said view and at least part of the assigned data objects.

3. The method according to claim 1 or 2, wherein each splitter instance is assigned to a splitter instance identifier being indicative of a root splitter instance or a nested splitter instance.

4. The method according to any one of the preceding claims, wherein displaying the grid in step (i) comprises the following steps:
a) detecting a binary user input consisting of a selection whether the area is to be divided horizontally or vertically;
b) determining whether the area is to be split horizontally or vertically based on the user input detected in step a), and performing a horizontal or vertical split into two views separated by a splitter line having a defined thickness, the splitting being assigned to a splitter instance identifier indicating a root splitter instance or a nested splitter instance and the root splitter instance or the nested splitter instance being associated with a defined splitting ratio between having the first and the second view and with the splitter line having a defined thickness;
c) provide the views generated from the splitting performed in step b) for display within the area of the GUI;
d) optionally repeating steps a) and b) for at least one generated view;
e) detecting a user input being indicative of finishing generation of the grid;
f) detecting a user input being indicative of assigning at least one data object type provided by the dashboard software product to at least one view of the grid obtained after step e); assigning said data object type(s) to the respective view(s) providing the assigned data object(s) for display in the respective views of the grid.

5. The method according to any one of the preceding claims, wherein the defined splitting ratio is a pre-defined splitting ratio or a user-modified splitting ratio of ax:bx with aₓ > 0, bₓ > 0 and x representing a splitter instance identifier assigned to the splitter instance associated with the splitting ratio.

6. The method according to any one of the preceding claims, wherein splitter instance identifier is indicative of the chronological creation order of all splitter instances along each branch starting from the root splitter instance.

7. The method according to any one of the preceding claims, wherein the data associated with the grid is generated during generation of the grid.

8. The method according to any one of the preceding claims, wherein the step of resizing the view determined in step (ii) and at least part of its assigned data objects includes:
(iv-1) maximizing the view determined in step (iv) while minimizing the other view of the splitter instance determined in step (iv) and the thickness of the splitter line of said splitter instance,
(iv-2) optionally minimizing the thickness of each splitter line associated with all descendent splitter instances of the view minimized in step (v-1);
(iv-3) optionally repeating steps (vi-1) and (vi-2) for all or at least part of the ancestor splitter instances of the splitter instance determined in step (iv), wherein the view of each ancestor splitter instance is maximized upon repeating step (vi-1) which is associated with the view of the descendant splitter instance maximized in step (vi-1) and wherein the thickness of all splitter lines of all descendant splitter instances associated with the view minimized in step (vi-1) are minimized upon repeating step (v-2); and
(iv-4) determining the aspect ratio of the maximized view of the root splitter instance and enlarging at least part of the data objects assigned to the view determined in step (iv) from their initial aspect ratio to the determined aspect ratio of the maximized view.

9. The method according to claim 7, wherein maximizing the view includes setting the splitting ratio of ax:bx - with ax > 0 and bx > 0 and x representing a splitter instance identifier assigned to the splitter instance associated with the splitting ratio - of the splitter instance determined in step (iv) or the ancestor splitter instance(s) determined in step (vi-3) to a_{x_max} = ax+bx and b_{x_max} = 0 or bx_max = aₓ+bₓ and a_{x_max} = 0.

10. The method according to any one of claims 7 to 9, wherein repeating steps (iv-1) and (iv-2) for all or at least part of the ancestor splitter instances of the splitter instance determined in step (iv) includes:
a) determining the view of the ancestor splitter instance of the splitter instance associated with the view of the descendant splitter instance maximized in step (iv-1),
b) maximizing the view of the ancestor splitter instance determined in step a) while minimizing the other view of said ancestor splitter instance and the thickness of the splitter line associated with said ancestor splitter instance,
c) minimizing the thickness of all splitter lines of all descendent splitter instances of the view minimized in step b), and
d) repeating steps a) to c) for all or at least part of the further ancestor splitter instances of the view of the ancestor splitter instance determined in step a).

11. The method according to any one of the preceding claims further including the following steps:
(vii) detecting a user input to restore the view to the grid displayed in step (i), and
(viii) restoring the grid based on the retrieved or determined data associated with the grid.

12. The method according to claim 11, wherein restoring the grid includes
(viii-1) restoring the splitting ratio of the root splitting instance to the value contained in the retrieved or determined data associated with the grid and restoring the splitter line thickness of the root splitter instance,
(viii-2) determining the descendant splitter instance of the root splitter instance for which the splitting ratio was adjusted during step (v) and restoring the splitting ratio of said descendant splitter instance to the value contained in the retrieved or determined data associated with the grid and restoring the splitter line thickness of said descendant splitter instance,
(viii-3) optionally repeating step (viii-2) for all descendant splitter instances of the splitter instance determined in step (viii-2) for which the splitting ratio was modified in step (v), and
(viii-4) providing all resized views and all assigned data objects in the area of the GUI.

13. A computer apparatus for resizing a view and at least part of its assigned data objects of a grid displayed in an area of a graphical user interface (GUI) of a dashboard software, said system comprising:
- a display configured to display the GUI comprising the grid containing at least two views and at least one data object assigned to at least one of the views and to display the resized view and at least part of its assigned data objects in the area of the GUI;
- an interaction element configured to detect a user input to resize a view and at least part of its assigned data objects of the displayed grid;
- one or more computing nodes; and
- one or more computer-readable media having thereon computer-executable instructions that are structured such that, when executed by the one or more computing nodes, cause the apparatus to perform the steps according to any one of claims 1 to 12.

14. A non-transitory computer-readable storage medium, the computer-readable storage medium including instructions that when executed by one or more processors of a computer system, cause the computer system to perform the steps according to the method of any of claims 1 to 12.

15. Use of the method of any of claims 1 to 12 in a dashboard software product, in particular in a colorimetry software.
